# EUROPÄISCHE PATENTSCHRIFT

(11) **EP 0 488 950 B1**
(45) Veröffentlichungstag und Bekanntmachung des Hinweises auf die Patenterteilung: **20.09.1995**
(21) Anmeldenummer: 91810907.5
(22) Anmeldetag: 21.11.1991
(51) Int. Cl.: C08L 57/08, C08K 5/00, C08K 13/02

(54) **Stabilisierte chlorhaltige Polymere**
Stabilized chlorinated polymers
Polymères chlorés stabilisés

(30) Priorität: 30.11.1990 CH 3792/90
(43) Veröffentlichungstag der Anmeldung: 03.06.1992
(73) Patentinhaber: CIBA-GEIGY AG, 4002 Basel (CH)
(72) Erfinder: Sander, Hans Jürgen, W-6143 Lorsch (DE); Hartmann, Olaf-René, Dr., W-6140 Bensheim 2 (DE); Wirth, Hermann O., Dr., W-6140 Bensheim 3 (DE)

(56) Entgegenhaltungen:
- EP-A- 0 005 678
- EP-A- 0 051 334
- EP-A- 0 422 335

## Beschreibung

Die Erfindung betrifft stabilisierte chlorhaltige Polymerzusammensetzungen enthaltend ein sterisch gehindertes Amin in Kombination mit anderen Stabilisatoren.

Es ist bekannt, dass sterisch gehinderte Amine, beispielsweise Derivate des 2,2,6,6-Tetramethylpiperidins, ausgezeichnete Stabilisatoren für Polymere gegen Schädigung durch kurzwelliges Licht sind. In Polyvinylchlorid oder anderen chlorhaltigen Polymeren führt der Zusatz solcher sterisch gehinderter Amine jedoch häufig zu Verfärbungen während der thermoplastischen Verarbeitung oder im Gebrauch. Erst durch Zusatz von Costabilisatoren gelingt es, diese Verfärbungen zu verhindern oder zu vermindern.

So sind in der JP-A-82/168933 Folien aus weichgemachtem Polyvinylchlorid beschrieben, die mit einem sterisch gehinderten Amin und einem UV-Absorber gegen Licht geschützt sind und als Costabilisatoren Zinkstearat. Bariumstearat und epoxydiertes Soyaöl enthalten. In der JP-A-86/163965 wird die Stabilisierung von PVC mit einem sterisch gehinderten Amin, einem Ca/Zn-Stabilisator und epoxydiertem Soyaöl beschrieben.

In der EP-A-237 485 wird die Kombination von sterisch gehinderten Aminen mit Organozinn-Stabilisatoren zur Stabilisierung von Hart-PVC empfohlen, wobei als weitere Zusätze Titandioxid und Calciumstearat verwendet werden können. In der EP-A-421 933 wird die Kombination von sterisch gehinderten Aminen mit Zinkverbindungen und einem Hydrotalcit zur Stabilisierung chlorhaltiger Polymere vorgeschlagen, wobei als weitere Zusätze 1,3-Diketone und Calciumverbindungen verwendet werden können.

In der EP-A-432 096 wird die Kombination von sterisch gehinderten Aminen mit Zinkverbindungen und einem Treibmittel oder Schäumungsmittel vorgeschlagen, wobei zusätzlich auch Calciumverbindungen und 1,3-Diketone verwendet werden können.

Es wurde nunmehr gefunden, dass solche Stabilisatorkombinationen auch ohne Organozinn-Stabilisatoren und ohne Hydrotalcit und ohne Treibmittel oder Schäumungsmittels sehr befriedigende Ergebnisse liefern, wenn sie sowohl Zink- wie Calcium-, Magnesium- oder Bariumverbindungen und eine 1,3-Dicarbonylverbindung enthalten.

Die Erfindung betrifft daher eine stabilisierte chlorhaltige Polymerzusammensetzung, enthaltend
a) mindestens ein chlorhaltiges Polymer,
b) mindestens ein sterisch gehindertes Amin,
c) mindestens eine organische oder anorganische Zinkverbindung
d) mindestens eine organische oder anorganische Calcium-, Magnesium- oder/und Bariumverbindung und
e) mindestens eine 1,3-Dicarbonylverbindung,
in Abwesenheit einer Organozinnverbindung, in Abwesenheit einer Verbindung aus der Reihe der Hydrotalcite und in Abwesenheit eines Treibmittels oder Schäumungsmittels, sowie ein Verfahren zum Stabilisieren von chlorhaltigen Polymeren gegen Schädigung durch Wärme und Licht durch Zusatz obengenannter Verbindungen.

Das chlorhaltige Polymer kann z.B. ein Polymer bzw. Copolymer des Vinylchlorids oder des Vinylidenchlorids sein oder ein nachchloriertes Polymer bzw. Copolymer des Vinylchlorids oder des Vinylidenchlorids, ein chloriertes Polyolefin, wie z.B. ein chloriertes Polyethylen, ein chloriertes Polymer bzw. Copolymer des Styrols oder des Butadiens oder ein chlorierter Kautschuk oder ein Kautschuk-Hydrochlorid, sowie eine Mischung eines solchen chlorhaltigen Polymers mit einem anderen chlorhaltigen oder chlorfreien Polymeren. Bevorzugt ist das chlorhaltige Polymer ein Polyvinylchlorid oder ein mindestens 80 % Vinylchlorid enthaltendes Copolymer oder eine Mischung (Polyblend) eines solchen Homo- oder Copolymers mit einem anderen chlorhaltigen oder chlorfreien Polymeren. Das chlorhaltige Polymer kann ein Emulsions-, Suspensions- oder Massepolymerisat sein.

Das sterisch gehinderte Amin ist vorzugsweise ein Polyalkylpiperidinderivat und enthält vorzugsweise mindestens eine Gruppe der Formel I 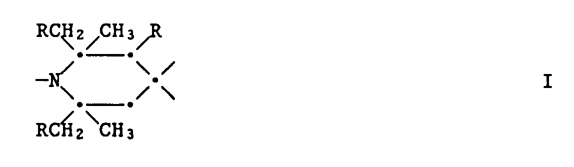
worin R Wasserstoff oder Methyl ist, und ist insbesondere ein Derivat des 2,2,6,6-Tetramethylpiperidins der Formel I, worin R Wasserstoff ist. In 4-Stellung des Piperidinrings sind diese Verbindungen vorzugsweise mit einem oder zwei polaren Gruppen oder einem Spiro-Ringsystem substituiert. Es kann sich bei diesen Verbindungen um niedermolekulare oder oligomere oder polymere Verbindungen handeln.

Von Bedeutung sind insbesondere die folgenden Klassen von Polyalkylpiperidinen.
a) Verbindungen der Formel II, 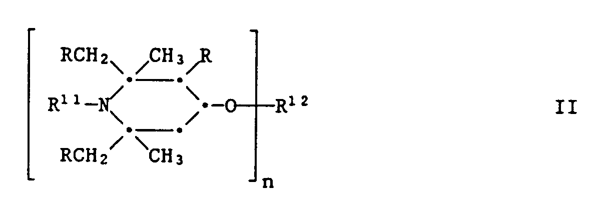 worin n eine Zahl von 1 bis 4, vorzugsweise 1 oder 2 bedeutet, R Wasserstoff oder Methyl bedeutet, R¹¹ Wasserstoff, Oxyl, Hydroxyl, C₁-C₁₂-Alkyl, C₃-C₈ Alkenyl, C₃-C₈-Alkinyl, C₇-C₁₂-Aralkyl, C₁-C₁₈-Alkoxy, C₅-C₈-Cycloalkoxy, C₇-C₉-Phenylalkoxy, C₁-C₈-Alkanoyl, C₃-C₅-Alkenoyl, C₁-C₁₈-Alkanoyloxy, Benzyloxy, Glycidyl oder eine Gruppe -CH₂CH(OH)-Z, worin Z Wasserstoff, Methyl oder Phenyl ist, bedeutet, wobei R¹¹ vorzugsweise H, C₁-C₄-Alkyl, Allyl, Benzyl, Acetyl oder Acryloyl ist und R¹², wenn n 1 ist, Wasserstoff, gegebenenfalls durch ein oder mehrere Sauerstoffatome unterbrochenes C₁-C₁₈-Alkyl, Cyanethyl, Benzyl, Glycidyl, einen einwertigen Rest einer aliphatischen, cycloaliphatischen, araliphatischen, ungesättigten oder aromatischen Carbonsäure, Carbaminsäure oder Phosphor enthaltenden Säure oder einen einwertigen Silylrest, vorzugsweise einen Rest einer aliphatischen Carbonsäure mit 2 bis 18 C-Atomen, einer cycloaliphatischen Carbonsäure mit 7 bis 15 C-Atomen, einer α,β-ungesättigten Carbonsäure mit 3 bis 5 C-Atomen oder einer aromatischen Carbonsäure mit 7 bis 15 C-Atomen bedeutet, wenn n 2 ist, C₁-C₁₂-Alkylen, C₄-C₁₂-Alkenylen, Xylylen, einen zweiwertigen Rest einer aliphatischen, cycloaliphatischen, araliphatischen oder aromatischen Dicarbonsäure, Dicarbaminsäure oder Phosphor enthaltenden Säure oder einen zweiwertigen Silylrest, vorzugsweise einen Rest einer aliphatischen Dicarbonsäure mit 2 bis 36 C-Atomen, einer cycloaliphatischen oder aromatischen Dicarbonsäure mit 8 - 14 C-Atomen oder einer aliphatischen, cycloaliphatischen oder aromatischen Dicarbaminsäure mit 8 - 14 C-Atomen bedeutet, wenn n 3 ist, einen dreiwertigen Rest einer aliphatischen, cycloaliphatischen oder aromatischen Tricarbonsäure, einer aromatischen Tricarbaminsäure oder einer Phosphor enthaltenden Säure oder einen dreiwertigen Silylrest bedeutet und wenn n 4 ist, einen vierwertigen Rest einer aliphatischen, cycloaliphatischen oder aromatischen Tetracarbonsäure bedeutet.
   Bedeuten etwaige Substituenten C₁-C₁₂-Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.
   In der Bedeutung von C₁-C₁₈-Alkyl kann R¹¹ oder R¹² z.B. die oben angeführten Gruppen und dazu noch beispielsweise n-Tridecyl, n-Tetradecyl, n-Hexadecyl oder n-Octadecyl darstellen.
   Wenn R¹¹ C₃-C₈-Alkenyl bedeutet, so kann es sich z.B. um 1-Propenyl, Allyl, Methallyl, 2-Butenyl, 2-Pentenyl, 2-Hexenyl, 2-Octenyl, 4-tert.-Butyl-2-butenyl handeln.
   R¹¹ ist als C₃-C₈-Alkinyl bevorzugt Propargyl.
   Als C₇-C₁₂-Aralkyl ist R¹¹ insbesondere Phenethyl und vor allem Benzyl.
   R¹¹ ist als C₁-C₈-Alkanoyl beispielsweise Formyl, Propionyl, Butyryl, Octanoyl, aber bevorzugt Acetyl und als C₃-C₅-Alkenoyl insbesondere Acryloyl.
   Bedeutet R¹² einen einwertigen Rest einer Carbonsäure, so stellt es beispielsweise einen Essigsäure-, Capronsäure-, Stearinsäure-, Acrylsäure-, Methacrylsäure-, Benzoe- oder β-(3,5-Di-tert.-butyl-4-hydroxyphenyl)-propionsäurerest dar.
   Bedeutet R¹² einen zweiwertigen Rest einer Dicarbonsäure, so stellt es beispielsweise einen Malonsäure-, Bernsteinsäure-, Glutarsäure-, Adipinsäure-, Korksäure-, Sebacinsäure-, Maleinsäure-, Itaconsäure-, Phthalsäure-, Dibutylmalonsäure-, Dibenzylmalonsäure-, Butyl-(3,5-di-tert.-butyl-4-hydroxybenzyl)-malonsäure- oder Bicycloheptendicarbonsäurerest dar.
   Stellt R¹² einen dreiwertigen Rest einer Tricarbonsäure dar, so bedeutet es z.B. einen Trimellitsäure-, Citronensäure- oder Nitrilotriessigsäurerest.
   Stellt R¹² einen vierwertigen Rest einer Tetracarbonsäure dar, so bedeutet es z.B. den vierwertigen Rest von Butan-1,2,3,4-tetracarbonsäure oder von Pyromellitsäure.
   Bedeutet R¹² einen zweiwertigen Rest einer Dicarbaminsäure, so stellt es beispielsweise einen Hexamethylendicarbaminsäure- oder einen 2,4-Toluylen-dicarbaminsäurerest dar.
   Bevorzugt sind Verbindungen der Formel II, worin R Wasserstoff ist, R¹¹ Wasserstoff oder Methyl ist, n 2 ist und R¹² der Diacylrest einer Dicarbonsäure mit 4-22 C-Atomen ist.
   Beispiele für Polyalkylpiperidin-Verbindungen dieser Klasse sind folgende Verbindungen:
   1) 4-Hydroxy-2,2,6,6-tetramethylpiperidin
   2) 1-Allyl-4-hydroxy-2,2,6,6-tetramethylpiperidin
   3) 1-Benzyl-4-hydroxy-2,2,6,6-tetramethylpiperidin
   4) 1-(4-tert.-Butyl-2-butenyl)-4-hydroxy-2,2,6,6-tetramethylpiperidin
   5) 4-Stearoyloxy-2,2,6,6-tetramethylpiperidin
   6) 1-Ethyl-4-salicyloyloxy-2,2,6,6-tetramethylpiperidin
   7) 4-Methacryloyloxy-1,2,2,6,6-pentamethylpiperidin
   8) 1,2,2,6,6-Pentamethylpiperidin-4-yl-β-(3,5-di-tert.butyl-4-hydroxyphenyl)-propionat
   9) Di-(1-benzyl-2,2,6,6-tetramethylpiperidin-4-yl)-maleinat
   10) Di-(2,2,6,6-tetramethylpiperidin-4-yl)-succinat
   11) Di-(2,2,6,6-tetramethylpiperidin-4-yl)-glutarat
   12) Di-(2,2,6,6-tetramethylpiperidin-4-yl)-adipat
   13) Di-(2,2,6,6-tetramethylpiperidin-4-yl)-sebacat
   14) Di-(1,2,2,6,6-pentamethylpiperidin-4-yl)-sebacat
   15) Di-(1,2,3,6-tetramethyl-2,6-diethyl-piperidin-4-yl)-sebacat
   16) Di-(1-allyl-2,2,6,6-tetramethylpiperidin-4-yl)-phthalat
   17) 1-Hydroxy-4-β-cyanoethyloxy-2,2,6,6-tetramethylpiperidin
   18) 1-Acetyl-2,2,6,6-tetramethylpiperidin-4-yl-acetat
   19) Trimellithsäure-tri-(2,2,6,6-tetramethylpiperidin-4-yl)-ester
   20) 1-Acryloyl-4-benzyloxy-2,2,6,6-tetramethylpiperidin
   21) Diethylmalonsäure-di(2,2,6,6-tetramethylpiperidin-4-yl)-ester
   22) Dibutyl-malonsäure-di-(1,2,2,6,6-pentamethylpiperidin-4-yl)-ester
   23) Butyl-(3,5-di-tert.-butyl-4-hydroxybenzyl)-malonsäure-di-(1,2,2,6,6-pentamethylpiperidin-4-yl)-ester
   24) Di-(1-octyloxy-2,2,6,6-tetramethylpiperidin-4-yl)-sebacat
   25) Di-(1-cyclohexyloxy-2,2,6,6-tetramethylpiperidin-4-yl)-sebacat
   26) Hexan-1',6'-bis-(4-carbamoyloxy-1-n-butyl-2,2,6,6-tetramethylpiperidin)
   27) Toluol-2',4'-bis-(4-carbamoyloxy-1-n-propyl-2,2,6,6-tetramethylpiperidin)
   28) Tetra-(2,2,6,6-tetramethylpiperidin-4-yl)-butantetracarboxylat
   29) Tetra-(1,2,2,6,6-pentamethylpiperidin-4-yl)-butantetracarboxylat
   30) Tris-(1-propyl-2,2,6,6-tetramethylpiperidin-4-yl)-phosphit
   31) Tris-(1-propyl-2,2,6,6-tetramethylpiperidin-4-yl)-phosphat
   32) Phenyl-[bis-(1,2,2,6,6-pentamethylpiperidin-4-yl)]-phosphonat
   33) 4-Hydroxy-1,2,2,6,6-pentamethylpiperidin
   34) 4-Hydroxy-N-hydroxyethyl-2,2,6,6-tetramethylpiperidin
   35) 4-Hydroxy-N-(2-hydroxypropyl)-2,2,6,6-tetramethylpiperidin
   36) 1-Glycidyl-4-hydroxy-2,2,6,6-tetramethylpiperidin
b) Verbindungen der Formel III, 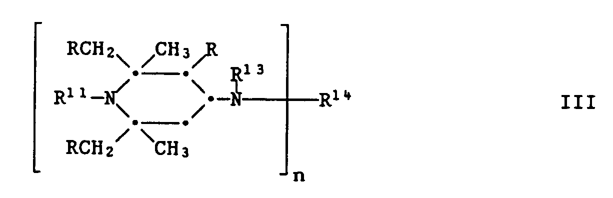 worin n die Zahl 1 oder 2 bedeutet, R und R¹¹ die unter a) angegebene Bedeutung haben, R¹³ Wasserstoff, C₁-C₁₂-Alkyl, C₂-C₅-Hydroxyalkyl, C₅-C₇-Cycloalkyl, C₇-C₈-Aralkyl, C₂-C₁₈-Alkanoyl, C₃-C₅-Alkenoyl, Benzoyl oder eine Gruppe der Formel 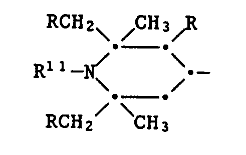 ist und R¹⁴ wenn n 1 ist, Wasserstoff, C₁-C₁₈-Alkyl, C₃-C₈-Alkenyl, C₅-C₇-Cycloalkyl, mit einer Hydroxy-, Cyano-, Alkoxycarbonyl- oder Carbamidgruppe substituiertes C₁-C₄-Alkyl, Glycidyl, eine Gruppe der Formel -CH₂-CH(OH)-Z oder der Formel -CONH-Z ist, worin Z Wasserstoff, Methyl oder Phenyl bedeutet; wenn n 2 ist, C₂-C₁₂-Alkylen, C₆-C₁₂-Arylen, Xylylen, eine -CH₂-CH(OH)-CH₂-Gruppe oder eine Gruppe -CH₂-CH(OH)-CH₂-O-D-O- bedeutet, worin D C₂-C₁₀-Alkylen, C₆-C₁₅-Arylen, C₆-C₁₂-Cycloalkylen ist, oder vorausgesetzt, dass R¹³ nicht Alkanoyl, Alkenoyl oder Benzoyl bedeutet, R¹⁴ auch einen zweiwertigen Rest einer aliphatischen, cycloaliphatischen oder aromatischen Dicarbonsäure oder Dicarbaminsäure oder auch die Gruppe -CO- bedeuten kann, oder R¹³ und R¹⁴ zusammen, wenn n 1 ist, den zweiwertigen Rest einer aliphatischen, cycloaliphatischen oder aromatischen 1,2- oder 1,3-Dicarbonsäure bedeuten können.
   Stellen etwaige Substituenten C₁-C₁₂- oder C₁-C₁₈-Alkyl dar, so haben sie die bereits unter a) angegebene Bedeutung.
   Bedeuten etwaige Substituenten C₅-C₇-Cycloalkyl, so stellen sie insbesondere Cyclohexyl dar.
   Als C₇-C₈-Aralkyl ist R¹³ insbesondere Phenylethyl oder vor allem Benzyl. Als C₂-C₅-Hydroxyalkyl ist R¹³ insbesondere 2-Hydroxyethyl oder 2-Hydroxypropyl.
   R¹³ ist als C₂-C₁₈-Alkanoyl beispielsweise Propionyl, Butyryl, Octanoyl, Dodecanoyl, Hexadecanoyl, Octadecanoyl, aber bevorzugt Acetyl und als C₃-C₅-Alkenoyl insbesondere Acryloyl.
   Bedeutet R¹⁴ C₂-C₈-Alkenyl, dann handelt es sich z.B. um Allyl, Methallyl, 2-Butenyl, 2-Pentenyl, 2-Hexenyl oder 2-Octenyl.
   R¹⁴ als mit einer Hydroxy-, Cyano-, Alkoxycarbonyl- oder Carbamidgruppe substituiertes C₁-C₄-Alkyl kann z.B. 2-Hydroxyethyl, 2-Hydroxypropyl, 2-Cyanethyl, Methoxycarbonylmethyl, 2-Ethoxycarbonylethyl, 2-Aminocarbonylpropyl oder 2-(Dimethylaminocarbonyl)-ethyl sein.
   Stellen etwaige Substituenten C₂-C₁₂-Alkylen dar, so handelt es sich z.B. um Ethylen, Propylen, 2,2-Dimethylpropylen, Tetramethylen, Hexamethylen, Octamethylen, Decamethylen oder Dodecamethylen.
   Bedeuten etwaige Substituenten C₆-C₁₅-Arylen, so stellen sie z.B. o-, m- oder p-Phenylen, 1,4-Naphthylen oder 4,4'-Diphenylen dar.
   Als C₆-C₁₂-Cycloalkylen ist D insbesondere Cyclohexylen.
   Bevorzugt sind Verbindungen der Formel III, worin n 1 oder 2 ist, R Wasserstoff ist, R¹¹ Wasserstoff oder Methyl ist, R¹³ Wasserstoff, C₁-C₁₂-Alkyl oder eine Gruppe der Formel 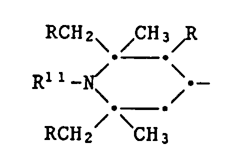 ist und R¹⁴ im Fall von n=1 Wasserstoff oder C₁-C₁₂-Alkyl ist, und im Fall von n=2 C₂-C₈-Alkylen ist.
   Beispiele für Polyalkylpiperidin-Verbindungen dieser Klasse sind folgende Verbindungen:
   37) N,N'-Bis-(2,2,6,6-tetramethylpiperidin-4-yl)-hexamethylen-1,6-diamin
   38) N,N'-Bis-(2,2,6,6-tetramethylpiperidin-4-yl)-hexamethylen-1,6-diacetamid
   39) Bis-(2,2,6,6-tetramethylpiperidin-4-yl)-amin
   40) 4-Benzoylamino-2,2,6,6-tetramethylpiperidin
   41) N,N'-Bis-(2,2,6,6-tetramethylpiperidin-4-yl)-N,N'-dibutyl-adipamid
   42) N,N'-Bis-(2,2,6,6-tetramethylpiperidin-4-yl)-N,N'-dicyclohexyl-2-hydroxypropylen-1,3-diamin
   43) N,N'-Bis-(2,2,6,6-tetramethylpiperidin-4-yl)-p-xylylen-diamin
   44) N,N'-Bis-(2,2,6,6-tetramethylpiperidin-4-yl)-succindiamid
   45) N-(2,2,6,6-Tetramethylpiperidin-4-yl)-β-aminodipropionsäure-di-(2,2,6,6-tetramethylpiperidin-4-yl)-ester
   46) Die Verbindung der Formel 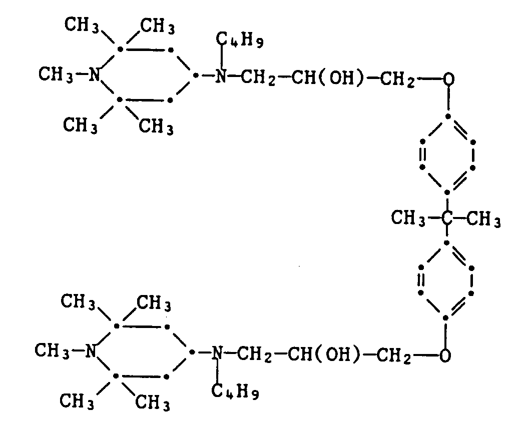
   47) 4-(Bis-2-hydroxyethyl-amino)-1,2,2,6,6-pentamethylpiperidin
   48) 4-(3-Methyl-4-hydroxy-5-tert.-butyl-benzoesäureamido)-2,2,6,6-tetramethylpiperidin
   49) 4-Methacrylamido-1,2,2,6,6-pentamethylpiperidin
c) Verbindungen der Formel IV, 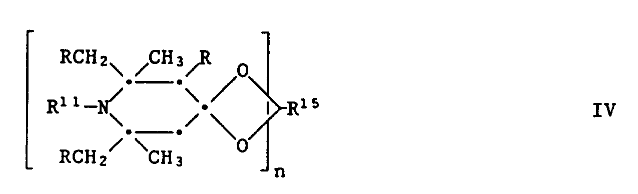 worin n die Zahl 1 oder 2 bedeutet, R und R¹¹ die unter a) angegebene Bedeutung haben und R¹⁵, wenn n 1 ist, C₂-C₈-Alkylen oder -Hydroxyalkylen oder C₄-C₂₂-Acyloxyalkylen, wenn n 2 ist, die Gruppe (-CH₂)₂C(CH₂-)₂ bedeutet.
   Bedeutet R¹⁵ C₂-C₈-Alkylen oder -Hydroxyalkylen, so stellt es beispielsweise Ethylen, 1-Methyl-ethylen, Propylen, 2-Ethyl-propylen oder 2-Ethyl-2-hydroxymethylpropylen dar.
   Als C₄-C₂₂-Acyloxyalkylen bedeutet R¹⁵ z.B. 2-Ethyl-2-acetoxymethylpropylen.
   Beispiele für Polyalkylpiperidin-Verbindungen dieser Klasse sind folgende Verbindungen:
   50) 9-Aza-8,8,10,10-tetramethyl-1,5-dioxaspiro[5.5]undecan
   51) 9-Aza-8,8,10,10-tetramethyl-3-ethyl-1,5-dioxaspiro[5.5]undecan
   52) 8-Aza-2,7,7,8,9,9-hexamethyl-1,4-dioxaspiro[4.5]decan
   53) 9-Aza-3-hydroxymethyl-3-ethyl-8,8,9,10,10-pentamethyl-1,5-dioxaspiro [5.5]undecan
   54) 9-Aza-3-ethyl-3-acetoxymethyl-9-acetyl-8,8,10,10-tetramethyl-1,5-dioxaspiro[5.5]undecan
   55) 2,2,6,6-Tetramethylpiperidin-4-spiro-2'-(1',3'-dioxan)-5'-spiro-5''-(1'',3''-dioxan)-2''-spiro-4'''-(2''',2''',6''',6'''-tetramethylpiperidin).
d) Verbindungen der Formeln VA, VB und VC 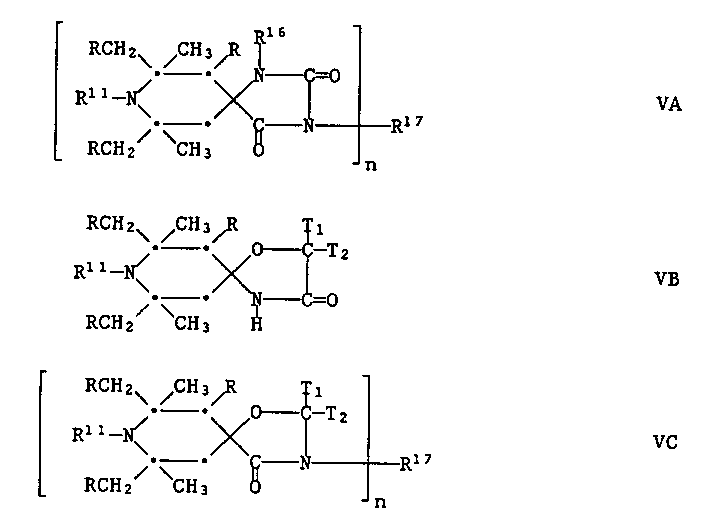 worin n die Zahl 1 oder 2 bedeutet, R und R¹¹ die unter a) angegebene Bedeutung haben, R¹⁶ Wasserstoff, C₁-C₁₂-Alkyl, Allyl, Benzyl, Glycidyl oder C₂-C₆-Alkoxyalkyl ist und R¹⁷, wenn n 1 ist, Wasserstoff, C₁-C₁₂-Alkyl, C₃-C₅-Alkenyl, C₇-C₉-Aralkyl, C₅-C₇ Cycloalkyl, C₂-C₄-Hydroxyalkyl, C₂-C₆-Alkoxyalkyl, C₆-C₁₀-Aryl, Glycidyl oder eine Gruppe der Formel -(CH₂)ₚ-COO-Q oder der Formel -(CH₂)ₚ-O-CO-Q ist, worin p 1 oder 2 und Q C₁-C₄ Alkyl oder Phenyl sind, wenn n 2 ist, C₂-C₁₂ Alkylen, C₄-C₁₂-Alkenylen, C₆-C₁₂ Arylen, eine Gruppe -CH₂-CH(OH)-CH₂-O-D-O-CH₂-CH(OH)-CH₂-, worin D C₂-C₁₀ Alkylen, C₆-C₁₅-Arylen, C₆-C₁₂ Cycloalkylen ist, oder eine Gruppe -CH₂CH(OZ')CH₂-(OCH₂-CH(OZ')CH₂)₂- bedeutet, worin Z' Wasserstoff, C₁-C₁₈-Alkyl, Allyl, Benzyl, C₂-C₁₂-Alkanoyl oder Benzoyl ist, T₁ und T₂ unabhängig voneinander Wasserstoff, C₁-C₁₈-Alkyl oder gegebenenfalls durch Halogen oder C₁-C₄-Alkyl substituiertes C₆-C₁₀-Aryl oder C₇-C₉-Aralkyl bedeuten oder T₁ und T₂ zusammen mit dem sie bindenden C-Atom einen C₅-C₁₂-Cycloalkanring bilden.
   Bedeuten etwaige Substituenten C₁-C₁₂-Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.
   Etwaige Substituenten in der Bedeutung von C₁-C₁₈-Alkyl können z.B. die oben angeführten Gruppen und dazu noch beispielsweise n-Tridecyl, n-Tetradecyl, n-Hexadecyl oder n-Octadecyl darstellen.
   Bedeuten etwaige Substituenten C₂-C₆-Alkoxyalkyl, so stellen sie z.B. Methoxymethyl, Ethoxymethyl, Propoxymethyl, tert.-Butoxymethyl, Ethoxyethyl, Ethoxypropyl, n-Butoxyethyl, tert.-Butoxyethyl, Isopropoxyethyl oder Propoxypropyl dar.
   Stellt R¹⁷ C₃-C₅-Alkenyl dar, so bedeutet es z.B. 1-Propenyl, Allyl, Methallyl, 2-Butenyl oder 2-Pentenyl.
   Als C₇-C₉-Aralkyl sind R¹⁷, T₁ und T₂ insbesondere Phenethyl oder vor allem Benzyl. Bilden T₁ und T₂ zusammen mit dem C-Atom einen Cycloalkanring, so kann dies z.B. ein Cyclopentan-, Cyclohexan-, Cyclooctan- oder Cyclododecanring sein.
   Bedeutet R¹⁷ C₂-C₄-Hydroxyalkyl, so stellt es z.B. 2-Hydroxyethyl, 2-Hydroxypropyl, 2-Hydroxybutyl oder 4-Hydroxybutyl dar.
   Als C₆-C₁₀-Aryl bedeuten R¹⁷, T₁ und T₂ insbesondere Phenyl, α- oder β-Naphthyl, die gegebenenfalls mit Halogen oder C₁-C₄-Alkyl substituiert sind.
   Stellt R¹⁷ C₂-C₁₂-Alkylen dar, so handelt es sich z.B. um Ethylen, Propylen, 2,2-Dimethylpropylen, Tetramethylen, Hexamethylen, Octamethylen, Decamethylen oder Dodecamethylen.
   Als C₄-C₁₂-Alkenylen bedeutet R¹⁷ insbesondere 2-Butenylen, 2-Pentenylen oder 3-Hexenylen.
   Bedeutet R¹⁷ C₆-C₁₂ Arylen, so stellt es beispielsweise o-, m- oder p-Phenylen, 1,4-Naphthylen oder 4,4'-Diphenylen dar.
   Bedeutet Z' C₂-C₁₂ Alkanoyl, so stellt es beispielsweise Propionyl, Butyryl, Octanoyl, Dodecanoyl, aber bevorzugt Acetyl dar.
   D hat als C₂-C₁₀ Alkylen, C₆-C₁₅ Arylen oder C₆-C₁₂ Cycloalkylen die unter b) angegebene Bedeutung.
   Bevorzugt unter den Verbindungen der Klasse d) sind die Verbindungen der Formel VA, worin n 1 ist, R Wasserstoff ist, R₁₁ Wasserstoff oder Methyl ist, R₁₆ Wasserstoff oder C₁-C₁₂-Alkyl ist und R₁₇ C₁-C₁₂-Alkyl, Allyl oder Benzyl ist.
   Beispiele für Polyalkylpiperidin-Verbindungen der Klasse d) sind folgende Verbindungen:
   56) 3-Benzyl-1,3,8-triaza-7,7,9,9-tetramethylspiro[4.5]decan-2,4-dion
   57) 3-n-Octyl-1,3,8-triaza-7,7,9,9-tetramethylspiro[4.5]decan-2,4-dion
   58) 3-Allyl-1,3,8-triaza-1,7,7,9,9-pentamethylspiro[4.5]decan-2,4-dion
   59) 3-Glycidyl-1,3,8-triaza-7,7,8,9,9-pentamethylspiro[4.5]decan-2,4-dion
   60) 1,3,7,7,8,9,9-Heptamethyl-1,3,8-triazaspiro[4.5]decan-2,4-dion
   61) 2-Iso-propyl-7,7,9,9-tetramethyl-1-oxa-3,8-diaza-4-oxo-spiro[4.5]decan
   62) 2,2-Dibutyl-7,7,9,9-tetramethyl-1-oxa-3,8-diaza-4-oxo-spiro[4.5]decan
   63) 2,2,4,4-Tetramethyl-7-oxa-3,20-diaza-21-oxo-dispiro[5.1.11.2]heneicosan
   64) 2-Butyl-7,7,9,9-tetramethyl-1-oxa-4,8-diaza-3-oxo-spiro-[4,5]decan
   65) 8-Acetyl-3-dodecyl-1,3,8-triaza-7,7,9,9-tetramethylspiro[4,5]-decan-2,4-dion
   oder die Verbindungen der folgenden Formeln: 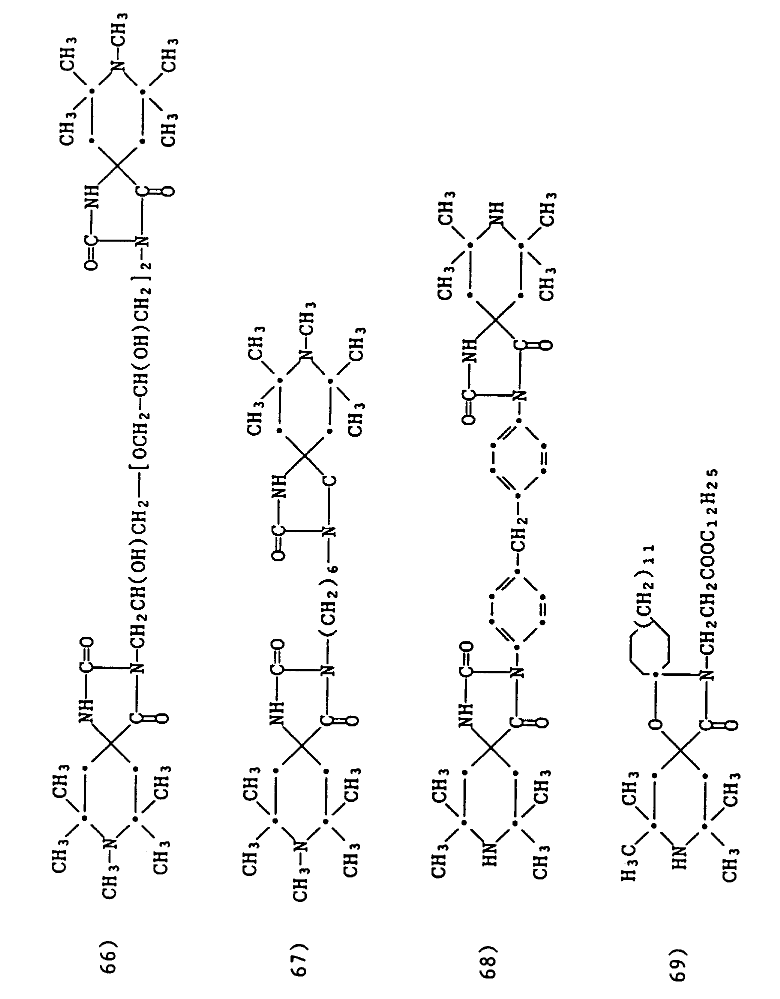
e) Verbindungen der Formel VI, 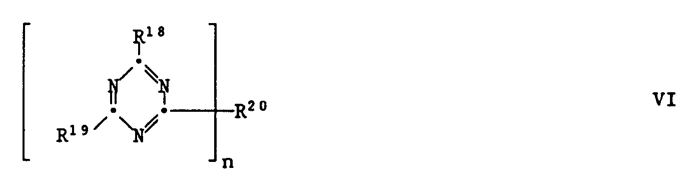 worin n die Zahl 1 oder 2 ist und R¹⁸ eine Gruppe der Formel 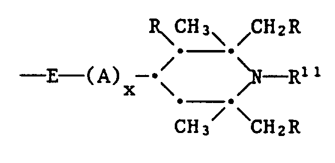 bedeutet, worin R und R¹¹ die unter a) angegebene Bedeutung haben, E -O- oder -NR²¹- ist, A C₂-C₆-Alkylen oder -(CH₂)₃-O- und x die Zahlen 0 oder 1 bedeuten, R¹⁹ gleich R¹⁸ oder eine der Gruppen -NR²¹R²², -OR²³, -NHCH₂OR²³ oder -N(CH₂OR²³)₂ ist, R²⁰, wenn n = 1 ist, gleich R¹⁸ oder R¹⁹, und wenn n = 2 ist, eine Gruppe -E-B-E- ist, worin B gegebenenfalls durch -N(R²¹)- unterbrochenes C₂-C₆-Alkylen bedeutet, R²¹ C₁-C₁₂-Alkyl, Cyclohexyl, Benzyl oder C₁-C₄-Hydroxyalkyl oder eine Gruppe der Formel 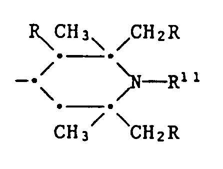 ist, R²² C₁-C₁₂ Alkyl, Cyclohexyl, Benzyl, C₁-C₄ Hydroxyalkyl und R²³ Wasserstoff, C₁-C₁₂ Alkyl oder Phenyl bedeuten oder R²¹ und R²² zusammen C₄-C₅-Alkylen oder -Oxaalkylen, beispielsweise 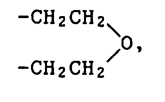 oder eine Gruppe der Formel 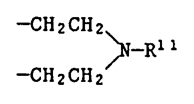 sind oder auch R²¹ und R²² jeweils eine Gruppe der Formel 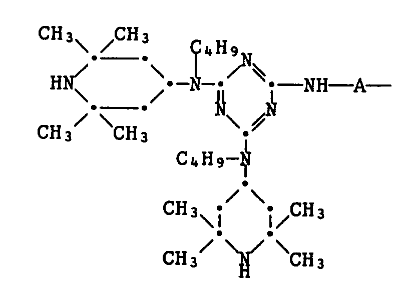 bedeuten.
   Bedeuten etwaige Substituenten C₁-C₁₂-Alkyl, so stellen sie beispielsweise Methyl, Ethyl, n-Propyl, n-Butyl, sek.-Butyl, tert.-Butyl, n-Hexyl, n-Octyl, 2-Ethylhexyl, n-Nonyl, n-Decyl, n-Undecyl oder n-Dodecyl dar.
   Bedeuten etwaige Substituenten C₁-C₄-Hydroxyalkyl, so stellen sie z.B. 2-Hydroxyethyl, 2-Hydroxypropyl, 3-Hydroxypropyl, 2-Hydroxybutyl oder 4-Hydroxybutyl dar.
   Bedeutet A C₂-C₆ Alkylen, so stellt es beispielsweise Ethylen, Propylen, 2,2-Dimethylpropylen, Tetramethylen oder Hexamethylen dar.
   Stellen R²¹ und R²² zusammen C₄-C₅-Alkylen oder -Oxaalkylen dar, so bedeutet dies z.B. Tetramethylen, Pentamethylen oder 3-Oxapentamethylen.
   Bevorzugt sind Verbindungen der Formel VI, worin n 4 ist, R¹⁸ und R¹⁹ eine Gruppe 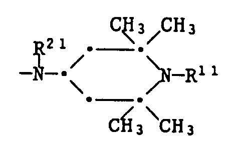 bedeuten, worin R¹¹ Wasserstoff oder Methyl ist und R²¹ Wasserstoff oder C₁-C₆-Alkyl ist, und R²⁰ den vierwertigen Rest eines aliphatischen Tetramins bedeutet.
   Beispiele für Polyalkylpiperidin-Verbindungen der Klasse e) sind die Verbindungen der folgenden Formeln: 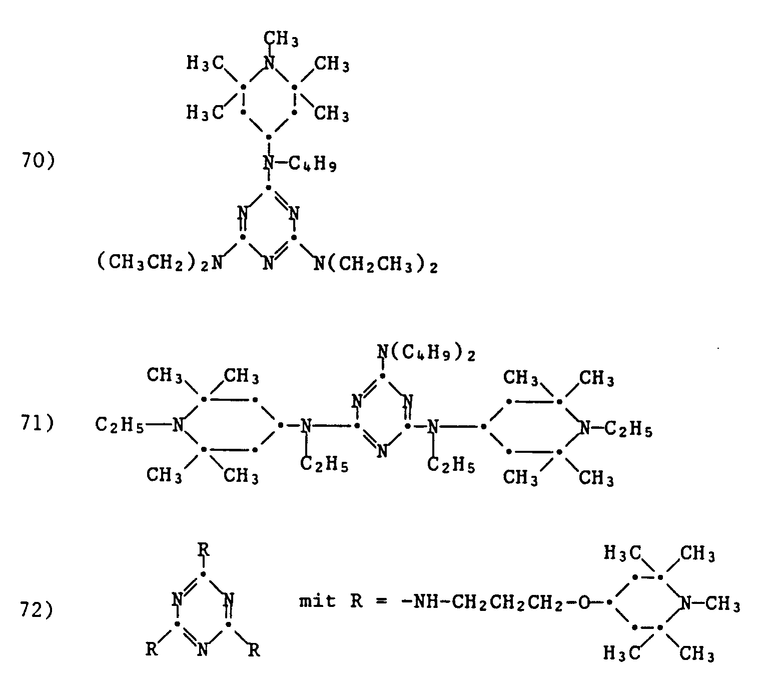 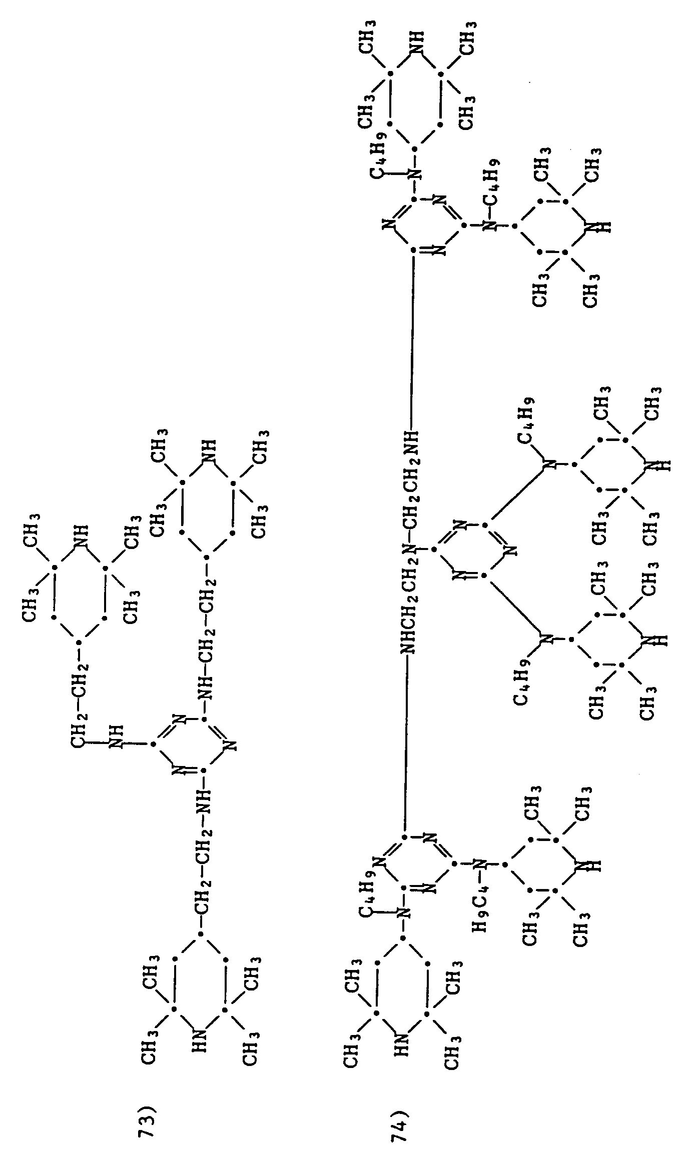 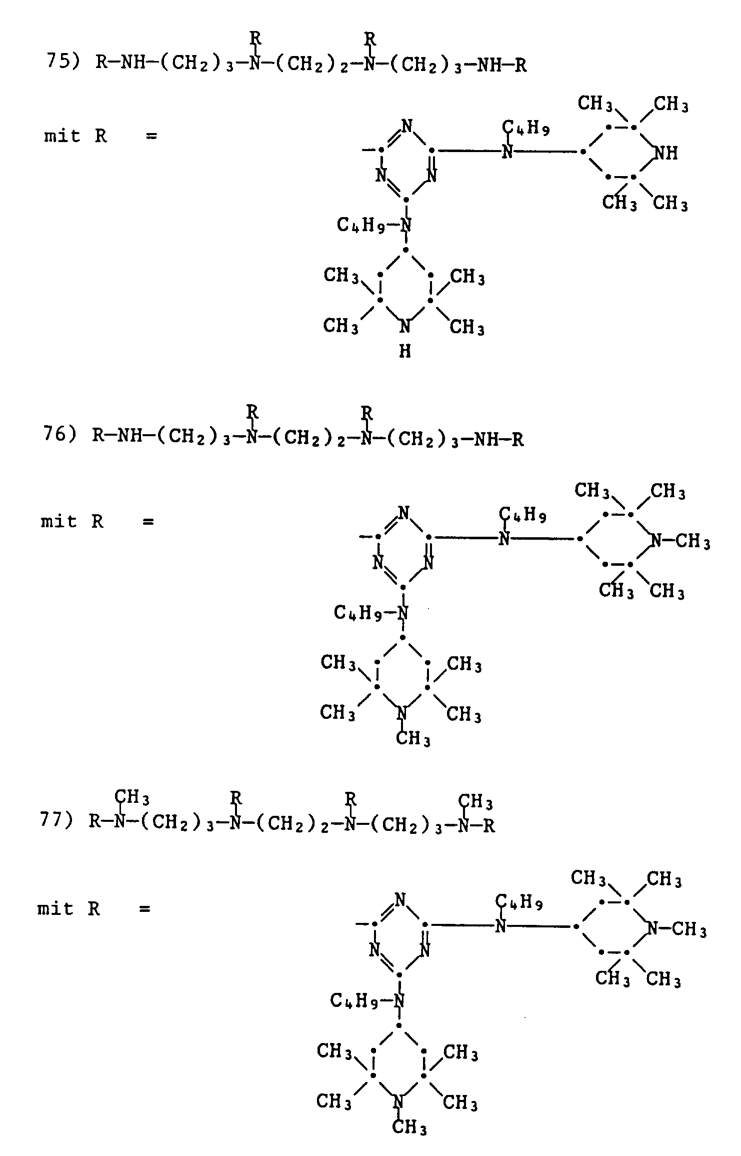 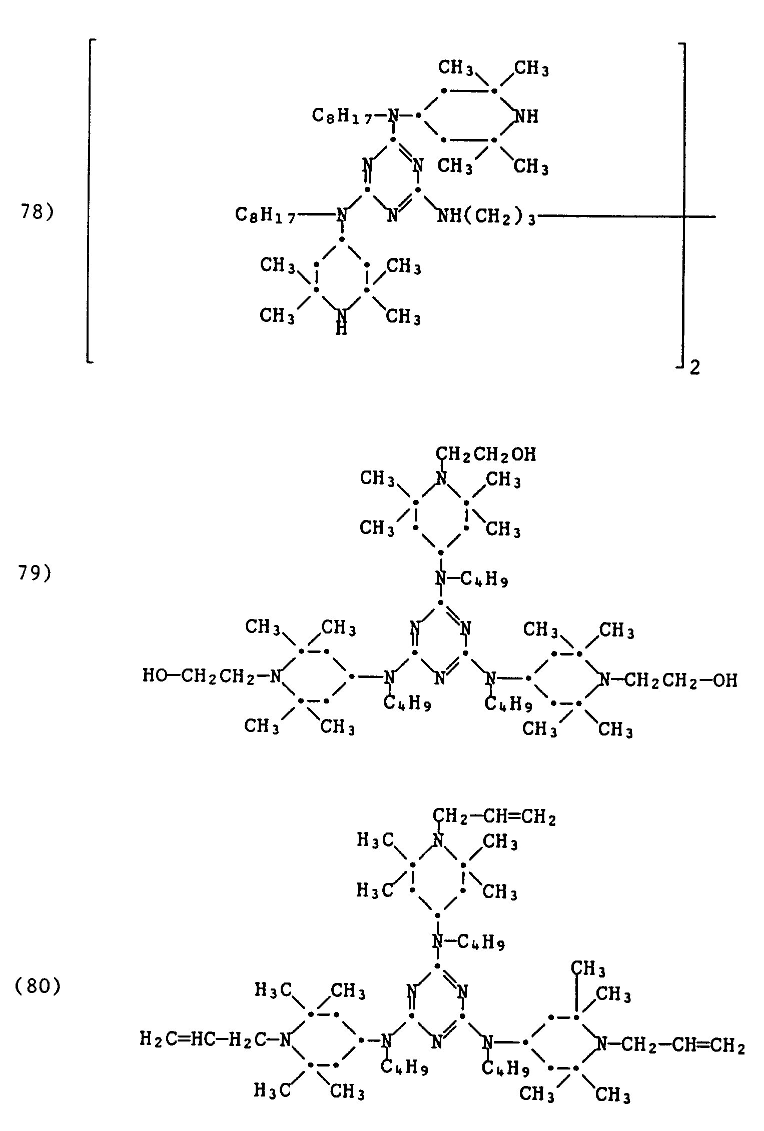
f) Oligomere oder polymere Verbindungen, deren wiederkehrende Struktureinheit einen Polyalkylpiperidinrest der Formel (I) enthält, insbesondere Polyester, Polyäther, Polyamide, Polyamine, Polyurethane, Polyharnstoffe, Polyaminotriazine, Poly(meth)acrylate, Poly(meth)acrylamide und deren Copolymere, die solche Reste enthalten. Darunter sind die Polyester und Polyaminotriazine bevorzugt.

Beispiele für 2,2,6,6-Polyalkylpiperidin-Lichtschutzmittel dieser Klasse sind die Verbindungen der folgenden Formeln, wobei m eine Zahl von 2 bis etwa 200 bedeutet. 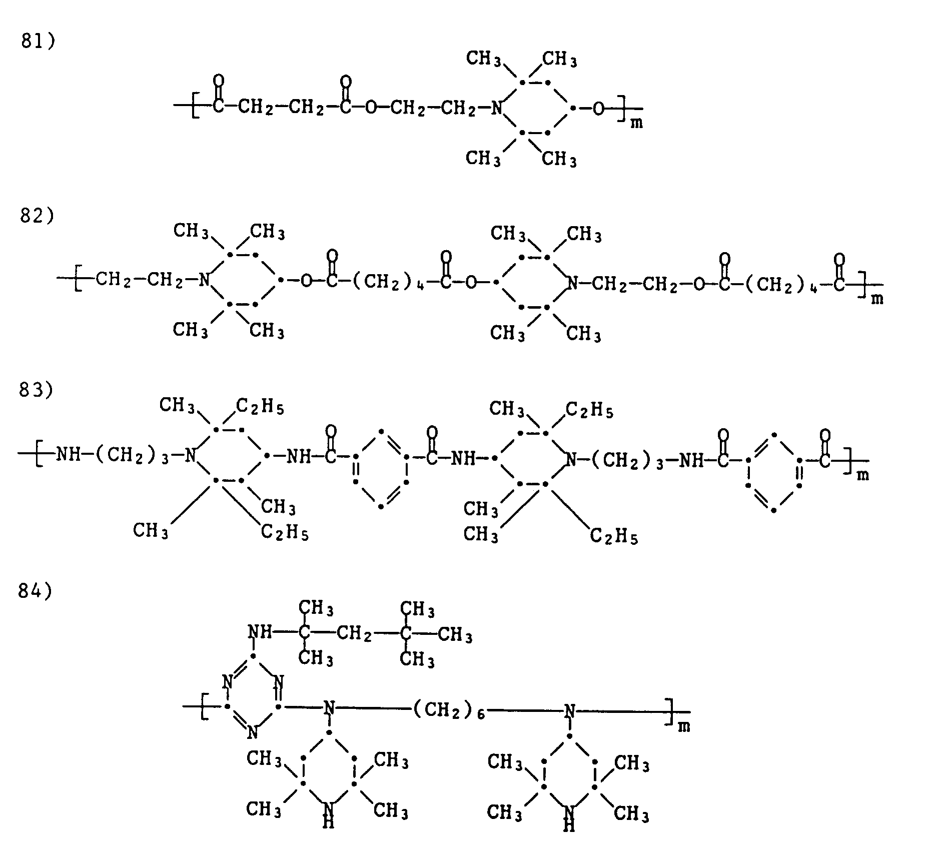 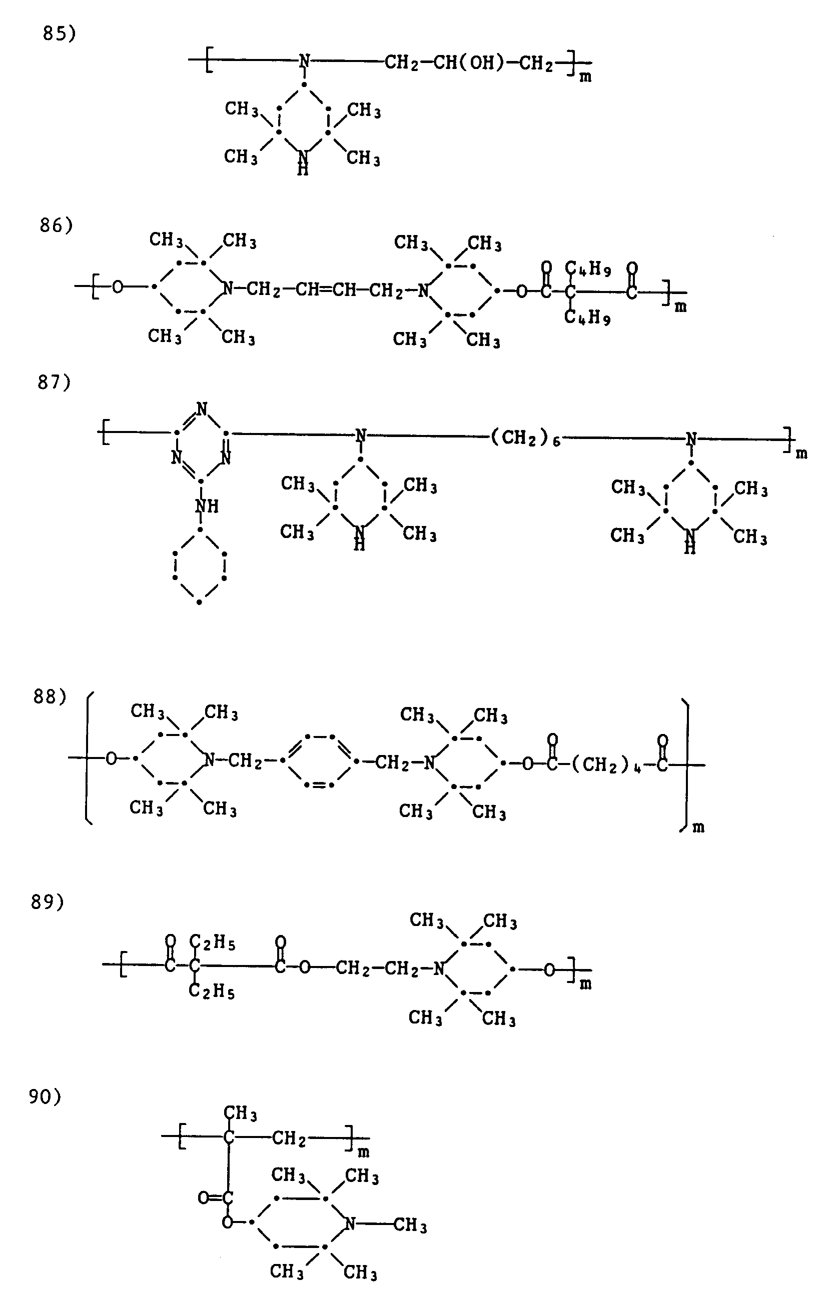 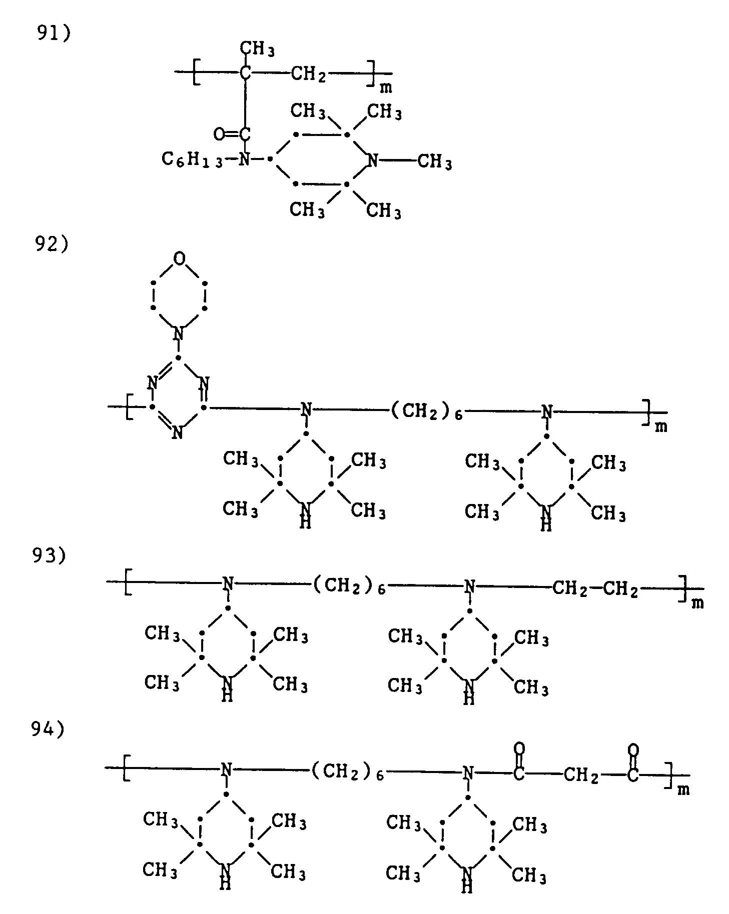
Von diesen Klassen sind die Klassen a), d), e) und f) besonders bevorzugt, insbesondere die Verbindungen 10, 13, 14, 23, 24, 28, 29, 63, 65, 75, 77, 81, 84 und 92.

Diese sterisch gehinderten Amine sind bekannte Verbindungen, viele davon sind kommerziell erhältlich. Es können auch zwei verschiedene sterisch gehinderte Amine verwendet werden, beispielsweise eines von niedrigem und eines von höherem Molekulargewicht, wie dies im US-A-4 692 486 beschrieben ist.

Die als Komponente c) verwendete Zinkverbindung kann eine organische Zinkverbindung sein, z.B. das Zinksalz einer Carbonsäure, Sulfonsäure, Phosphonsäure oder Phosphinsäure oder das Zinksalz eines Phenols oder ein Zinkchelat, wie z.B. das Enolat einer 1,3-Diketoverbindung. Die Komponente c) kann auch eine anorganische Zinkverbindung sein, z.B. ein Oxid, Hydroxid, Carbonat, Phosphat, Phosphit, Sulfat, Chlorid, Fluorid oder Hypophosphit.

Bevorzugt ist c) das Zinksalz einer C₁-C₂₂-Carbonsäure, eines C₆-C₁₈-Phenols oder eines C₅-C₂₂-1,3-Diketons. Die Carbonsäure kann eine gesättigte oder ungesättigte aliphatische oder cycloaliphatische Carbonsäure sein oder eine aromatische oder aromatisch-aliphatische Carbonsäure sein.

Beispiele hierfür sind Ameisensäure, Essigsäure, Propionsäure, Buttersäure, Capronsäure, 2-Ethylhexansäure, Caprylsäure, Laurinsäure, Myristylsäure, Oenanthsäure, Neodecansäure, Palmitinsäure, Stearinsäure, Isostearinsäure, 12-Hydroxystearinsäure, Ölsäure, Behensäure, Montansäure, Benzoesäure, Chlorbenzoesäure, p-tert. Butylbenzoesäure, p-Dodecylbenzoesäure, Salicylsäure, 3,4-Di-tert.butyl-4-hydroxybenzoesäure, Tolylsäure, Dimethylbenzoesäure, Thioglykolsäure, Milchsäure, Abietinsäure, β-Mercaptopropionsäure, β-Dodecylmercaptopropionsäure, Phenylessigsäure oder der Halbester oder das Halbamid einer Dicarbonsäure. Auch Zinksalze von langkettigen α-Aminocarbonsäuren und von α-Acylaminocarbonsäuren sind hierfür geeignet.

Beispiele für C₆-C₁₈-Phenole sind Phenol, Kresol, Xylenol, 4-tert. Butylphenol, 4-Nonylphenol, 4-Dodecylphenol, 4-Chlorphenol oder 2-Hydroxydiphenyl.

Beispiele für C₅-C₂₂-1,3-Diketone sind Acetylaceton, Butanoylaceton, Stearoylaceton, Lauroylaceton, Benzoylaceton, Dibenzoylmethan, Lauroylbenzoylmethan. Stearoyl-benzoylmethan oder Bis(4-methylbenzoyl)-methan.

Bevorzugt ist c) das Zinksalz einer aliphatischen C₇-C₂₀-Carbonsäure. Es können auch Gemische von Zinkverbindungen verwendet werden, z.B. die Zinksalze technischer Carbonsäuregemische oder technischer Alkylphenolgemische. Besonders bevorzugt sind Zinkstearat, Zinklaurat, Zink-2-ethylhexanoat und Zinkoleat.

Die als Komponente d) verwendete Calcium-, Magnesium- oder Bariumverbindung kann eine organische Verbindung sein, wie z.B. das Ca-, Mg- oder Ba-Salz einer Carbonsäure, Sulfonsäure, Phosphonsäure, Phosphinsäure, eines Phenols oder eines Enols. Die Komponente d) kann auch eine anorganische Verbindung sein, wie z.B. ein Oxid, Hydroxid, Carbonat, Phosphat, Phosphit oder Hypophosphit des Calciums, Magnesiums oder Bariums.

Bevorzugt ist d) das Calcium-, Magnesium- oder Bariumsalz einer C₁-C₂₂-Carbonsäure, eines C₅-C₁₂-1,3-Diketons oder eines C₆-C₁₈-Phenols, insbesondere das Salz einer aliphatischen C₇-C₂₀-Carbonsäure. Beispiele solcher Carbonsäuren und Phenole sind wie bei den Zinksalzen beschrieben. Besonders geeignet sind Calcium-, Magnesium- und Barium-stearat, -laurat und -oleat.

Als Komponete e) verwendbare 1,3-Dicarbonylverbindungen können lineare oder cyclische Dicarbonylverbindungen sein. Bevorzugt werden Dicarbonylverbindungen der Formel VII verwendet, 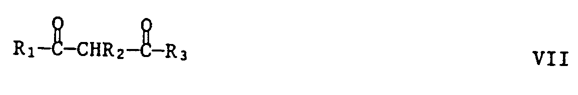
worin R₁ C₁-C₂₂-Alkyl, C₅-C₁₀-Hydroxyalkyl, C₂-C₁₈-Alkenyl, Phenyl, durch OH, C₁-C₄-Alkyl, C₁-C₄-Alkoxy oder Halogen substituiertes Phenyl, C₇-C₁₀-Phenylalkyl, C₅-C₁₂-Cycloalkyl, durch C₁-C₄-Alkyl substituiertes C₅-C₁₂-Cycloalkyl oder eine Gruppe -R₅-S-R₆ oder -R₅-O-R₆ bedeutet,
R₂ Wasserstoff, C₁-C₈-Alkyl, C₂-C₁₂-Alkenyl, Phenyl, C₇-C₁₂-Alkylphenyl, C₇-C₁₀-Phenylalkyl oder eine Grupe -CO-R₄ bedeutet,
R₃ eine der für R₁ gegebenen Bedeutungen hat oder C₁-C₁₈-Alkoxy bedeutet,
R₄ C₁-C₄-Alkyl oder Phenyl bedeutet,
R₅ C₁-C₁₀-Alkylen bedeutet und
R₆ C₁-C₁₂-Alkyl, Phenyl, C₇-C₁₈-Alkylphenyl oder C₇-C₁₀-Phenylalkyl bedeutet.

Hierzu gehören die Hydroxylgruppen enthaltenden Diketone der EP-A-346 279 und die Oxa- und Thia-diketone der EP-A-307 358.

R₁ und R₃ als Alkyl können insbesondere C₁-C₁₈-Alkyl sein, wie z.B. Methyl, Ethyl, n-Propyl, Isopropyl, n-Butyl, tert. Butyl, Pentyl, Hexyl, Heptyl, Octyl, Decyl, Dodecyl oder Octadecyl.

R₁ und R₃ als Hydroxyalkyl stellen insbesondere eine Gruppe -(CH₂)ₙ-OH dar, worin n 5, 6 oder 7 ist.

R₁ und R₃ als Alkenyl können beispielsweise Vinyl, Allyl, Methallyl, 1-Butenyl, 1-Hexenyl oder Oleyl bedeuten, vorzugsweise Allyl.

R₁ und R₃ als durch OH, Alkyl, Alkoxy oder Halogen substituiertes Phenyl können beispielsweise Tolyl, Xylyl, tert. Butylphenyl, Methoxyphenyl, Ethoxyphenyl, Hydroxyphenyl, Chlorphenyl oder Dichlorphenyl sein.

R₁ und R₃ als Phenylalkyl sind insbesondere Benzyl.
R₂ und R₃ als Cycloalkyl oder Alkyl-cycloalkyl sind insbesondere Cyclohexyl oder Methylcyclohexyl.

R₂ als Alkyl kann insbesondere C₁-C₄-Alkyl sein.
R₂ als C₂-C₁₂-Alkenyl kann insbesondere Allyl sein. R₂ als Alkylphenyl kann insbesondere Tolyl sein. R₂ als Phenylalkyl kann insbesondere Benzyl sein. Vorzugsweise ist R₂ Wasserstoff.
R₃ als Alkoxy kann z.B. Methoxy, Ethoxy, Butoxy, Hexyloxy, Octyloxy, Dodecyloxy, Tridecyloxy, Tetradecyloxy oder Octadecyloxy sein.
R₅ als C₁-C₁₀-Alkylen ist insbesondere C₂-C₄-Alkylen.
R₆ als Alkyl ist insbesondere C₄-C₁₂-Alkyl, wie z.B. Butyl, Hexyl, Octyl, Decyl oder Dodecyl. R₆ als Alkylphenyl ist insbesondere Tolyl.
R₆ als Phenylalkyl ist insbesondere Benzyl.

Beispiele für 1,3-Dicarbonylverbindungen der Formel VII sind Acetylaceton, Butanoylaceton, Heptanoylaceton, Stearoylaceton, Palmitoylaceton, Lauroylaceton, 7-tert.Nonylthio-heptandion-2,4, Benzoylaceton, Dibenzoylmethan, Lauroylbenzoylmethan, Palmitoyl-benzoylmethan, Stearoyl-benzoylmethan, 5-Hydroxycapronyl-benzoylmethan, Tribenzoylmethan, Bis(4-methylbenzoyl)methan, Benzoyl-p-chlorbenzoylmethan, Bis(2-hydroxybenzoyl)methan, 4-Methoxybenzoyl-benzoylmethan, Bis(4-methoxybenzoyl)methan, 1-Benzoyl-1-acetylnonan, Benzoyl-acetyl-phenylmethan, Stearoyl-4-methoxybenzoylmethan, Bis(4-tert-butylbenzoyl)methan, Benzoyl-formylmethan, Benzoyl-phenylacetylmethan, Bis(cyclohexanoyl)methan, Di(pivaloyl)methan, Acetessigsäure-methylester, -ethylester, -hexylester, -octylester, -dodecylester oder -octadecylester, Benzoylessigsäure-ethylester, -butylester, -2-ethylhexylester, -dodecylester oder -octadecylester und Stearoylessigsäure-ethyl, -propyl-, -butyl-, -hexyl- oder -octylester.

Bevorzugt als Komponente e) sind Verbindungen der Formel VII, worin R₁ C₁-C₁₈-Alkyl, Phenyl, durch OH, Methyl oder Methoxy substituiertes Phenyl, C₇-C₁₀-Phenylalkyl oder Cyclohexyl ist, R₂ Wasserstoff ist und R₃ eine der für R₁ gegebenen Bedeutungen hat.

Bevorzugt enthalten die erfindungsgemässen Zusammensetzungen auf 100 Gew.-Teile der Komponente (a) 0,01 bis 2 Gew.-Teile der Komponente (b), 0,01 bis 3 Gew.-Teile der Komponente (c), 0,01 bis 3 Gew.-Teile der Komponente (d) und 0,05 bis 2 Gew.-Teile der Komponente (e), insbesondere 0,1 bis 1 Gew.-Teile der Komponente (b), 0,1 bis 2 Gew.-Teile der Komponente (c), 0,1 bis 2 Gew.-Teile der Komponente (d) und 0,1 bis 1 Gew.-Teile der Komponente (e).

Darüber hinaus kann die Zusammensetzung weitere Zusätze enthalten, wie sie für die Verarbeitung und Stabilisierung von chlorhaltigen Polymeren bekannt und üblich sind. Dies sind z.B. Weichmacher, Phosphite, Blei-und Cadmiumverbindungen, metallfreie PVC-Stabilisatoren, Schlagzähigkeitsmodifikatoren, Wärmestandfestigkeitsverbesserer, Epoxidverbindungen, Antioxidantien, UV-Absorber und Lichtschutzmittel, Pigmente, Farbstoffe, Füllstoffe, Gleitmittel oder Flammschutzmittel.

Beispiele für Weichmacher sind die Ester von Phthalsäure, Adipin-, Azelain-, Sebazin- oder Trimellitsäure, Polyester aus aliphatischen Diolen und Dicarbonsäuren, Phosphorsäureester, Chlorparaffine oder epoxidierte Fettsäureester. Weitere Beispiele mögen dem "Taschenbuch der Kunststoff-Additive", R. Gächter, H. Müller, Hanser-Verlag 1983, Seite 280-307, entnommen werden. Die Weichmacher können in einer Menge von 15 bis 100 Gew.-Teilen, bezogen auf 100 Gew.-Teile des chlorhaltigen Polymeren, verwendet werden.

Organische Phosphite sind bekannte Costabilisatoren für mit Metallcarboxylaten stabilisierte chlorhaltige Polymere, insbesondere in Kombination mit Zink-, Barium-, Magnesium- oder Cadmium-Stabilisatoren. Beispiele von solchen Phosphiten sind Trioctyl-, Tridecyl-, Tridodecylphosphit, Decyl-diphenylphosphit, Triphenylphosphit, Phenyl-didecylphosphit, Tris-(nonylphenyl)-phosphit, Trilaurylphosphit, Trioctadecylphosphit, Distearyl-pentaerythritdiphosphit, 2,4-Di-tert.butylphenyl-di(dodecyl)phosphit, Tris-(2,4-di-tert.butylphenyl)-phosphit, Diisodecylpentaerythrit-diphosphit, Bis-(2,4-di-tert.butylphenyl)-pentaerythritdiphosphit, Tristearylsorbit-triphosphit, 3,9-Bis-(2,4-di-tert.butylphenoxy)-2,4,8,10-tetra-oxa-3,9-diphosphaspiro[5.5]undecan.

Blei- und Cadmiumverbindungen haben ähnliche Wirkung wie die Calcium-, Magnesium- und Bariumverbindungen, sind jedoch ökologisch bedenklich. Beispiele hierfür sind die Metallsalze von Fettsäuren, z.B. Stearate, Palmitate oder Oleate sowie anorganische Salze, wie z.B. basische Sulfate oder Phosphite.

Metallfreie Stabilisatoren für chlorhaltige Polymere sind z.B. aliphatische Polyole, wie Pentaerythrit, Dipentaerythrit, Trimethylolpropan, Tris(2-hydroxyethyl)-isocyanurat, Sorbit, Mannit oder Furan; Aminocrotonsäureester; Mercaptobenzoesäureester; Dehydracetsäure; 2,4-Dihydroxybenzophenon; Enolcarbonate, wie sie in EP-A-224 438 beschrieben sind; aromatische Amide, wie Sie in EP-A-122 228 und 174 412 beschrieben sind; sowie Stickstoff-haltige Heterocyclen, wie sie in den EP-A- 2007, 22087, 22749, 41479, 65934, 260 226, 354 179, DE-A-3 048 659, 3 124 853, GB-A-2 170 203 und US-A-4 908 398 beschrieben sind.

Schlagzähigkeitsmodifikatoren sind z.B. Polyacrylate, Ethylen-Vinylacetat-Copolymere oder chloriertes Polyethylen. Wärmestandfestigkeitsverbesserer sind z.B. Poly(meth)acrylate, Acrylat-Maleinimid-Copolymere oder Acrylnitril-Methylstyrol-Copolymere.

Epoxidverbindungen sind ebenfalls bekannte Stabilisatoren für chlorhaltige Polymere. Sie können bei geeigneter Struktur auch gleichzeitig als Weichmacher wirken. Beispiele für Epoxid-Stabilisatoren sind epoxidiertes Polybutadien, epoxidiertes Sojaöl, epoxidiertes Leinsamenöl, epoxidiertes Fischöl, epoxidierter Talg, Methylbutyl- oder 2-Ethylhexylepoxystearat, Tris(epoxyropyl)isocyanurat, epoxidiertes Ricinusöl, epoxidiertes Sonnenblumenöl, 3-(2-Phenoxy)-1,2-epoxypropan, Bisphenol-A-polyglycidylether, Vinylcyclohexendiepoxyd, Dicyclopentadiendiepoxyd oder 3,4-Epoxycyclohexylmethyl-3,4-epoxycyclohexancarboxylat.

Beispiele für Antioxidantien sind:
1. Alkylierte Monophenole, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol.
2. Alkylierte Hydrochinone, z.B. 2,6-Di-tert.butyl-4-methoxyphenol, 2,5-Di-tert.butyl-hydrochinon, 2,5-Di-tert.amyl-hydrochinon, 2,6-Diphenyl-4-octadecyloxyphenol.
3. Hydroxylierte Thiodiphenylether, z.B. 2,2'-Thio-bis-(6-tert.-butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol).
4. Alkyliden-Bisphenole, z.B. 2,2'-Methylen-bis-(6-tert.butyl-4-methylphenol), 2,2'-Methylen-bis-(6-tert.butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert.butylphenol), 2,2'-Ethyliden-bis-(4,6-di-tert.butylphenol), 2,2'-Ethyliden-bis-(6-tert.butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert.-butylphenol), 4,4'-Methylen-bis-(6-tert.butyl-2-methylphenol), 1,1-Bis-(5-tert.butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methylphenyl)-3-n-dodecylmercaptobutan, Ethylenglycol-bis-[3,3-bis-(3'-tert.-butyl-4'-hydroxyphenyl)-butyrat], Bis-(3-tert.butyl-4-hydroxy-5-methyl-phenyl)-dicyclopentadien, Bis-[2-(3'-tert.butyl-2'-hydroxy-5'-methylbenzyl)-6-tert.butyl-4-methyl-phenyl]-terephthalat.
5 Benzylverbindungen, z.B. 1,3,5-Tris-(3,5-di-tert.butyl-4-hydroxybenzyl)-2,4,6-trimethylbenzol, Bis-(3,5-di-tert.butyl-4-hydroxybenzyl)-sulfid, 3,5-Di-tert.butyl-4-hydroxybenzyl-mercaptoessigsäure-isooctylester, Bis-(4-tert.butyl-3-hydroxy-2,6-dimethylbenzyl)dithiol-terephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzyl-phosphonsäure-dioctadecylester, Ca-Salz des 3,5-Di-tert.butyl-4-hydroxybenzyl-phosphonsäure-monoethylester, 1,3,5-Tris-(3,5-dicyclohexyl-4-hydroxybenzyl)isocyanurat.
6. Acylaminophenole, z.B. 4-Hydroxy-laurinsäureanilid, 4-Hydroxystearinsäureanilid, 2,4-Bis-(octylmercapto)-6-(3,5-di-tert.butyl-4-hydroxyanilino)-s-triazin, N-(3,5-di-tert.butyl-4-hydroxyphenyl)-carbaminsäureoctylester.
7. Ester der β-(3,5-Di-tert.butyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid.
8. Ester der β-(5-tert.Butyl-4-hydroxy-3-methylphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid.
9. Ester der β-(3,5-Dicyclohexyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid.
10. Amide der β-(3,5-Di-tert.butyl-4-hydroxyphenyl)-propionsäure, wie z.B. N,N'-Bis-(3,5-di-tert.butyl-4-hydroxyphenylpropionyl)-hexamethylendiamin, N,N'-Bis-(3,5-di-tert.butyl-4-hydroxyphenylpropionyl)-trimethylendiamin, N,N'-Bis-(3,5-di-tert.butyl-4-hydroxyphenylpropionyl)-hydrazin.

Beispiele für UV-Absorber und Lichtschutzmittel sind:
1. 2-(2'-Hydroxyphenyl)-benztriazole, wie z.B. das 5'-Methyl-, 3',5'-Di-tert.butyl, 5'-tert.Butyl-, 5'-(1,1,3,3-Tetramethylbutyl), 5-Chlor-3',5'-di-tert.butyl-, 5-Chlor-3'-tert.butyl-5'-methyl-, 3'-sec.Butyl-5'-tert.butyl, 4'-Octoxy-, 3',5'-Di-tert.amyl-, 3',5'-Bis-(α,α-dimethylbenzyl)-Derivat.
2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
3. Ester von gegebenenfalls substituierten Benzoesäuren, wie z.B. 4-tert.Butyl-phenylsalicylat, Phenylsalicylat, Octylphenyl-salicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester, 3,5-Di-tert.butyl-4-hydroxybenzoesäurehexadecylester.
4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.
5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
6. Oxalsäurediamide, wie z.B. 4,4'-Di-octyloxy-oxanilid, 2,2'-Di-octyloxy-5,5'-di-tert.butyl-oxanilid, 2,2'-Di-dodecyloxy-5,5'di-tert.butyl-oxanilid, 2-Ethoxy-2'-ethyl-oxanilid, N,N'-Bis-(3-dimethylaminopropyl)-oxalamid, 2-Ethoxy-5-tert.butyl-2'-ethyloxanilid und dessen Gemisch mit 2-Ethoxy-2'-ethyl-5,4'-di-tert.butyl-oxanilid, Gemische von o-und p-Methoxy- sowie von o- und p-Ethoxy-di-substituierten Oxaniliden.

Die verwendeten Pigmente können anorganische oder organische Pigmente sein, sie können auch metallische Pigmente sein. Füllstoffe sind z.B. Kreide, Russ, Graphit, Talk, Kaolin oder silikatische Mineralien. Die erfindungsgemässen Zusammensetzungen enthalten jedoch keine Hydrotalcit-Verbindungen.

Gleitmittel sind vor allem Fettsäuren und ihre Salze, Ester und Amide, Fettalkohole, Paraffine und Polyethylenwachse. Flammschutzmittel sind vor allem Antimonoxid, aromatische Bromverbindungen und Phosphorsäureester.

Eine Uebersicht über die Verwendung von Schlagzähigkeitsmodifkatoren, Farbmitteln, Füllstoffen, Gleitmitteln und Flammschutzmitteln in chlorhaltigen Polymeren, speziell in PVC, findet sich im "Taschenbuch der Kunststoff-Additive", R. Gächter, H. Müller, Hanser-Verlag 1983.

Die erfindungsgemässen Zusammensetzungen können auf an sich bekannte Weise hergestellt werden. In der Regel wird das Stabilisatorsystem in das Polymer eingearbeitet, wozu eine Reihe von bekannten Vorrichtungen, wie Kalander, Mischer, Kneter und dergleichen, existieren.

Die nach vorliegender Erfindung stabilisierten Zusammensetzungen können auf bekannte Weise in die gewünschte Form gebracht werden. Solche Verfahren sind beispielsweise Kalandrieren, Extrudieren, Spritzgiessen, Sintern oder Spinnen, ferner Extrusions-Blasen oder eine Verarbeitung nach dem Plastisol-Verfahren.

Die erfindungsgemässen Zusammensetzungen eignen sich insbesondere in Form von Hart-Rezepturen für Hohlkörper (Flaschen), Verpackungsfolien (Tiefziehfolien), Blasfolien, Crash pad-Folien (Automobile), Rohre, Schwerprofile (Fensterrahmen), Lichtwandprofile, Bauprofile, Sidings, Fittings, Bürofolien und Apparatur-Gehäuse (Computer, Haushaltgeräte).

Andere Zusammensetzungen in Form von Weich-Rezepturen sind für Drahtummantelungen, Kabelisolierungen, Dekorationsfolien, Dachfolien, Agrarfolien, Schläuche, Dichtungsprofile, Bürofolien und Folien für Traglufthallen geeignet.

Beispiele für die Anwendung der erfindungsgemässen Zusammensetzungen als Plastisole sind Kunstleder, Fussböden, Textilbeschichtungen, Tapeten, Coil-Coatings und Unterbodenschutz für Kraftfahrzeuge.

Beispiele für Sinter-PVC-Anwendungen der erfindungsgemässen Zusammensetzungen sind Slush, Slush Mould und Coil-Coatings.

Die nachfolgenden Beispiele erläutern die Erfindung näher. Alle Angaben in Teilen und Prozenten beziehen sich auf das Gewicht, sofern nicht anders angegben.

In den Beispielen werden folgende gehinderte Amine und 1,3-Diketone verwendet:
- H-1: 8-Acetyl-3-dodecyl-1,3,8-triaza-7,7,9,9-tetramethylspiro[4,5]decan-2,4-dion
- H-2: 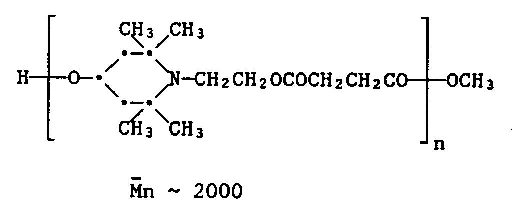
- H-3: Di-(1,2,2,6,6-Pentamethylpiperidin-4-yl)-sebacat
- H-4: 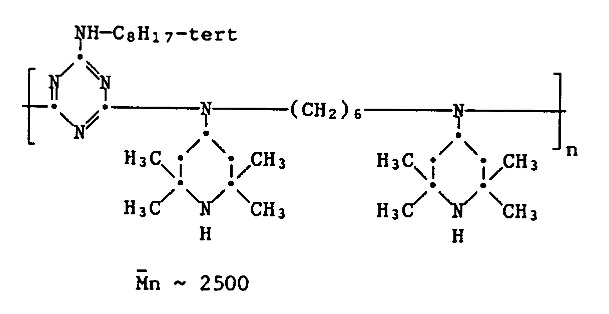
- H-5: Di-(2,2,6,6-tetramethylpiperidin-4-yl)-sebacat
- H-6: 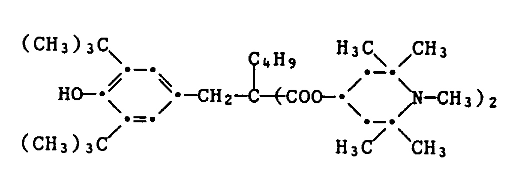
- D-1: Dibenzoylmethan
- D-2: Benzoyl-stearoylmethan

### Beispiel 1

Eine halbharte PVC-Zusammensetzung wird nach folgender Rezeptur (Gewichtsteile) bereitet:
100 Suspensions-PVC mit K-Wert 70 (Vinnol® H 70 DF)
17 Dioctylphthalat
3 Epoxidiertes Sojaöl (Reoplast® 39)
1 Didecyl-phenylphosphit
0,5 Zink-oleat
0,8 Barium-p-tert.butylbenzoat
0,6 Butylglykol
0,3 Sterisch gehindertes Amin
Ein Teil der Proben wird ausserdem mit 0,3 Teilen eines Diketons vermischt. Die Bestandteile werden 5 Minuten bei 180°C auf einer Mischwalze homogenisiert unter Bildung einer 0,3 mm starken Folie. Aus der Folie werden Proben geschnitten, die in einem Testofen (Mathis Thermotester® LTF-ST) auf 180°C erwärmt werden. Die dabei auftretende Verfärbung wird nach ASTM D 1925-70 als Yellowness-Index (YI) gemessen. Je höher dieser Index ist, desto stärker ist die Verfärbung. Tabelle 1 zeigt die Resultate.

**Tabelle 1**

| Gehindertes Amin*) | Diketon*) | Yellowness-Index nach | | | | | | | |
|---|---|---|---|---|---|---|---|---|---|
| | | 0 | 6 | 12 | 18 | 24 | 30 | 36 | 42 min |
| 0,3 H-1 | - | 14 | 15 | 19 | 23 | 25 | 21 | 21 | 24 |
| 0,3 H-1 | 0,3 D-1 | 8 | 9 | 9 | 9 | 9 | 11 | 13 | 15 |
| 0,3 H-2 | - | 11 | 13 | 17 | 18 | 20 | 18 | 18 | 20 |
| 0,3 H-2 | 0,3 D-1 | 7 | 8 | 8 | 9 | 9 | 10 | 15 | 17 |
| 0,3 H-3 | - | 9 | 12 | 16 | 18 | 21 | 17 | 17 | 18 |
| 0,3 H-3 | 0,3 D-1 | 8 | 9 | 10 | 11 | 10 | 10 | 12 | 9 |
| 0,3 H-4 | - | 14 | 17 | 22 | 24 | 30 | 35 | 37 | 42 |
| 0,3 H-4 | 0,3 D-1 | 12 | 13 | 14 | 15 | 14 | 17 | 18 | 20 |
| 0,3 H-5 | - | 9 | 11 | 15 | 21 | 17 | 19 | 20 | 23 |
| 0,3 H-5 | 0,3 D-1 | 8 | 9 | 10 | 10 | 10 | 11 | 13 | 14 |
| 0,3 H-6 | - | 9 | 13 | 16 | 21 | 23 | 26 | 21 | 20 |
| 0,3 H-6 | 0,3 D-1 | 8 | 9 | 9 | 9 | 20 | 91 | 11 | 11 |

| | | | | | | | | | |
|---|---|---|---|---|---|---|---|---|---|
| *) Teile auf 100 Teile PVC | | | | | | | | | |

Man ersieht daraus, dass über die ganze gemessene Zeit die Proben, die das Diketon (D-1) enthalten, heller bleiben als die Proben ohne Diketon.

### Beispiel 2

Eine Hart-PVC-Rezeptur wird aus folgenden Komponenten zusammengemischt (Gew.-Teile):
100 Suspensions-PVC mit K-Wert 60 (Corvic® S 60/104)
3 Epoxidiertes Sojaöl (Reoplast® 39)
1,2 Zink-stearat
0,6 Calcium-stearat
Dazu kommen die in Tabelle 2 angegebenen Mengen an gehindertem Amin und Diketon. Die Bestandteile werden 5 Minuten auf einer Mischwalze bei 190°C zu einer 0,3 mm starken Folie verarbeitet.

Die aus den Folien geschnittenen Proben werden wie im Beispiel 1 bei 180°C thermisch belastet und der Yellowness-Index in Abständen von 5 Minuten gemessen.

**Tabelle 2**

| Gehindertes Amin*) | Diketon*) | Yellowness-Index nach | | | | | | | |
|---|---|---|---|---|---|---|---|---|---|
| | | 5 | 10 | 15 | 20 | 25 | 30 | 35 | 40 min |
| 0,3 H-4 | - | 49 | 56 | 63 | 64 | 66 | 68 | 69 | 69 |
| 0,3 H-4 | 0,1 D-2 | 11 | 13 | 16 | 22 | 33 | 48 | 55 | 58 |
| 0,3 H-4 | 0,3 D-2 | 10 | 12 | 15 | 17 | 20 | 29 | 44 | 50 |

| | | | | | | | | | |
|---|---|---|---|---|---|---|---|---|---|
| *) Teile auf 100 Teile PVC | | | | | | | | | |

Auch hier ist der aufhellende Einfluss des Diketons zu sehen, der insbesondere in den ersten 25 Minuten sehr stark ist.

### Beispiel 3

Proben einer Hart-PVC-Rezeptur werden wie in Beispiel 2 beschrieben aus folgenden Komponenten hergestellt (Gew.-Teile):
100 Suspensions-PVC mit K-Wert 67 (Vestolit® P 1982 K)
6 Kreide (Omya® 95 T)
4 Titandioxid (Kronos® CL 220)
1 Verarbeitungshilfsmittel auf Basis von PMMA (Irgamod® F 138)
0,5 Didecyl-phenylphosphit
0,8 Zink-stearat
1,1 Barium-laurat
0,1 Bisphenol A
Dazu kommen die in Tabelle 3 angegebenen Mengen an gehindertem Amin und 1,3-Diketon. Tabelle 3 gibt die Werte des Yellowness-Index bei thermischer Belastung bei 190°C an.

**Tabelle 3**

| Gehindertes Amin*) | Diketon*) | Yellowness-Index nach | | | | | | | |
|---|---|---|---|---|---|---|---|---|---|
| | | 5 | 10 | 15 | 20 | 25 | 30 | 35 | 40 min |
| 0,3 H-4 | - | 23 | 25 | 37 | 40 | 43 | 44 | 46 | 55 |
| 0,3 H-4 | 0,1 D-2 | 18 | 20 | 24 | 26 | 29 | 33 | 36 | 41 |
| 0,3 H-4 | 0,3 D-2 | 11 | 13 | 14 | 17 | 19 | 23 | 29 | 37 |

| | | | | | | | | | |
|---|---|---|---|---|---|---|---|---|---|
| *) Teile auf 100 Teile PVC | | | | | | | | | |

### Beispiel 4

Proben einer halbharten PVC-Zusammensetzung werden wie in Beispiel 2 beschrieben aus folgenden Komponenten hergestellt (Gew.-Teile):
100 Suspensions-PVC mit K-Wert 71 (Corvic® S 71/102)
20 Dioctylphthalat
0,64 Didecyl-phenylphosphit
0,52 Zink-oleat
0,59 Barium-tert.butylbenzoat
0,07 2,6-Di(tert.butyl)-p-kresol
0,16 Aromatisches Lösungsmittelgemisch (Shellsol® A)
Dazu kommen die in Tabelle 4 angegebenen Mengen an gehindertem Amin und 1,3 Diketon. Tabelle 4 zeigt den Yellowness-Index bei thermischer Belastung der Proben bei 190°C.

**Tabelle 4**

| Gehindertes Amin*) | Diketon*) | Yellowness-Index nach | | | | | | | |
|---|---|---|---|---|---|---|---|---|---|
| | | 5 | 10 | 15 | 20 | 25 | 30 | 35 | 40 min |
| 0,3 H-4 | - | 8 | 14 | 18 | 23 | 26 | 30 | 39 | 59 |
| 0,3 H-4 | 0,1 D-2 | 5 | 5 | 7 | 9 | 12 | 17 | 25 | 43 |
| 0,3 H-4 | 0,3 D-2 | 4 | 5 | 5 | 6 | 7 | 10 | 13 | 22 |

| | | | | | | | | | |
|---|---|---|---|---|---|---|---|---|---|
| *) Teile auf 100 Teile PVC | | | | | | | | | |

Man ersieht hier über den gesamten Test-Zeitraum eine deutliche aufhellende Wirkung des Diketons.

### Beispiel 5

Wie in Beispiel 2 beschrieben werden Proben der folgenden halbharten Zusammensetzung hergestelt (Gew.-Teile):
100 Suspensions-PVC mit K-Wert 71 (Corvic® S 71/102)
20 Dioctylphthalat
0,6 Didecyl-phenylphosphit
0,57 Zink-oleat
0,27 Calcium-p-tert.butylbenzoat
0,52 Aromatisches Lösungsmittelgemisch (Shellsol® A)
Dazu kommen die in Tabelle 5 aufgeführten Mengen an gehindertem Amin und 1,3-Diketon. Gezeigt wird der Yellowness-Index bei thermischer Belastung der Proben bei 190°C.

**Tabelle 5**

| Gehindertes Amin*) | Diketon*) | Yellowness-Index nach | | | | | |
|---|---|---|---|---|---|---|---|
| | | 5 | 10 | 15 | 20 | 25 | 30 min |
| 0,3 H-4 | - | 6 | 7 | 9 | 13 | 17 | 23 |
| 0,3 H-4 | 0,1 D-2 | 4 | 5 | 6 | 8 | 12 | 19 |
| 0,3 H-4 | 0,3 D-2 | 4 | 4 | 5 | 7 | 9 | 17 |

| | | | | | | | |
|---|---|---|---|---|---|---|---|
| *) Teile auf 100 Teile PVC | | | | | | | |

Man ersieht hier über den gesamten Test-Zeitraum eine deutliche positive Wirkung des Diketons.

## Patentansprüche

1. Stabilisierte chlorhaltige Polymerzusammensetzung, enthaltend
a) mindestens ein chlorhaltiges Polymer,
b) mindestens ein sterisch gehindertes Amin,
c) mindestens eine organische oder anorganische Zinkverbindung
d) mindestens eine organische oder anorganische Calcium-, Magnesium- oder/und Bariumverbindung und
e) mindestens eine 1,3-Dicarbonylverbindung,
in Abwesenheit einer Organozinnverbindung, in Abwesenheit einer Verbindung aus der Reihe der Hydrotalcite und in Abwesenheit eines Treibmittels oder Schäumungsmittels.

2. Polymerzusammensetzung gemäss Anspruch 1, dadurch gekennzeichnet, dass die Komponente a) ein Polyvinylchlorid oder ein mindestens 80 % Vinylchlorid enthaltendes Copolymer oder eine Mischung (Polyblend) eines solchen Polymers mit einem anderen chlorhaltigen oder chlorfreien Polymeren ist.

3. Polymerzusammensetzung gemäss Anspruch 1, dadurch gekennzeichnet, dass die Komponente b) ein Polyalkylpiperidinderivat ist, das mindestens eine Gruppe der Formel I enthält, 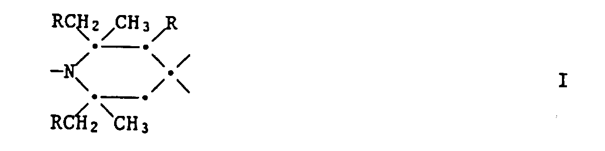 worin R Wasserstoff oder Methyl ist.

4. Polymerzusammensetzung gemäss Anspruch 3, worin R in Formel I Wasserstoff ist.

5. Polymerzusammensetzung gemäss Anspruch 3, dadurch gekennzeichnet, dass die Komponente b) ein Polyalkylpiperidinderivat der Formel II ist, 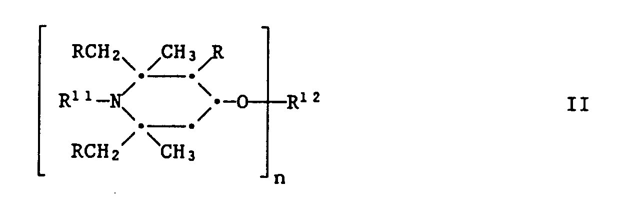 worin R Wasserstoff ist, R¹¹ Wasserstoff oder Methyl ist, n 2 ist und R¹² der Diacylrest einer Dicarbonsäure mit 4-22 C-Atomen ist.

6. Polymerzusammensetzung gemäss Anspruch 3, dadurch gekennzeichnet, dass die Komponente b) eine Polyalkylpiperidinverbindung der Formel VA ist 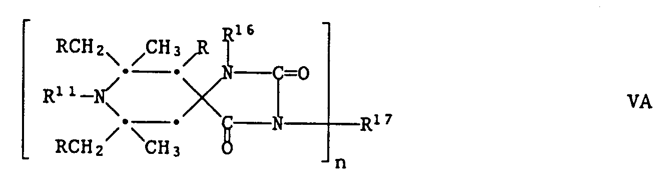 worin n 1 ist, R Wasserstoff ist, R₁₁ Wasserstoff oder Methyl ist, R₁₆ Wasserstoff oder C₁-C₁₂-Alkyl ist und R₁₇ C₁-C₁₂-Alkyl, Allyl oder Benzyl ist.

7. Polymerzusammensetzung gemäss Anspruch 3, dadurch gekennzeichnet, dass die Komponente b) eine Polyalkylpiperidinverbindung der Formel VI ist, 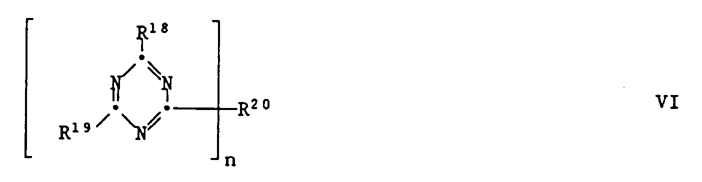 worin n 4 ist, R¹⁸ und R¹⁹ eine Gruppe 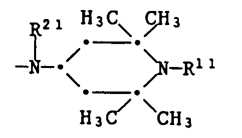 bedeuten, worin R¹¹ Wasserstoff oder Methyl ist und R²¹ Wasserstoff oder C₁-C₆-Alkyl ist, und R²⁰ den vierwertigen Rest eines aliphatischen Tetraamines bedeutet.

8. Polymerzusammensetzung gemäss Anspruch 3, dadurch gekennzeichnet, dass die Komponente b) eine oligomere oder polymere Polyalkylpiperidinverbindung aus der Reihe der Polyester oder Polyaminotriazine ist.

9. Polymerzusammensetzung gemäss Anspruch 1, dadurch gekennzeichnet, dass die Komponente c) das Zinksalz einer C₁-C₂₂-Carbonsäure, eines C₆-C₁₈-Phenols oder eines C₅-C₁₂-1,3-Diketons ist.

10. Polymerzusammensetzung gemäss Anspruch 9, dadurch gekennzeichnet, dass c) das Zinksalz einer aliphatischen C₇-C₂₀-Carbonsäure ist.

11. Polymerzusammensetzung gemäss Anspruch 1, dadurch gekennzeichnet, dass die Komponente d) das Ca-, Mg- oder Ba-Salz einer C₁-C₂₂-Carbonsäure, eines C₅-C₁₂-1,3-Diketons oder eines C₆-C₁₈-Phenols ist.

12. Polymerzusammensetzung gemäss Anspruch 11, dadurch gekennzeichnet, dass d) das Ca-, Mg- oder Ba-Salz einer aliphatischen C₇-C₂₀-Carbonsäure ist.

13. Polymerzusammensetzung gemäss Anspruch 1, dadurch gekennzeichnet, dass die Komponente e) eine 1,3-Dicarbonylverbindung der Formel VII ist, 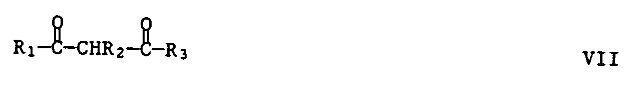 worin R₁ C₁-C₂₂-Alkyl, C₅-C₁₀-Hydroxyalkyl, C₂-C₁₈-Alkenyl, Phenyl, durch OH, C₂-C₄-Alkyl, C₁-C₄-Alkoxy oder Halogen substituiertes Phenyl, C₇-C₁₀-Phenylalkyl, C₅-C₁₂-Cycloalkyl, durch C₁-C₄-Alkyl substituiertes C₅-C₁₂-Cycloalkyl oder eine Gruppe -R₅-S-R₆ oder -R₅-O-R₆ bedeutet,
R₂ Wasserstoff, C₁-C₈-Alkyl, C₂-C₁₂-Alkenyl, Phenyl, C₇-C₁₂-Alkylphenyl, C₇-C₁₀-Phenylalkyl oder eine Gruppe -CO-R₄ bedeutet,
R₃ eine der für R₁ gegebenen Bedeutungen hat oder C₁-C₁₈-Alkoxy bedeutet,
R₄ C₁-C₄-Alkyl oder Phenyl bedeutet,
R₅ C₁-C₁₀-Alkylen bedeutet und
R₆ C₁-C₁₂-Alkyl, Phenyl, C₇-C₁₈-Alkylphenyl oder C₇-C₁₀-Phenylalkyl bedeutet.

14. Polymerzusammensetzung gemäss Anspruch 13, dadurch gekennzeichnet, dass die Komponente e) eine Verbindung der Formel VII ist, worin R₁ C₁-C₁₈-Alkyl, Phenyl, durch OH, Methyl oder Methoxy substituiertes Phenyl, C₇-C₁₀-Phenylalkyl oder Cycloalkyl ist, R₂ Wasserstoff ist und R₃ eine der für R₁ gegebenen Bedeutungen hat.

15. Polymerzusammensetzung gemäss Anspruch 1, enthaltend auf 100 Gew.-Teile (a) 0,01 bis 2 Gew.-Teile (b), 0,01 bis 3 Gew.-Teile (c), 0,01 bis 3 Gew.-Teile (d) und 0,05 bis 2 Gew.-Teile (e).

16. Polymerzusammensetzung gemäss Anspruch 15, enthaltend auf 100 Gew.-Teile (a) 0,1 bis 1 Gew.-Teile (b), 0,1 bis 2 Gew.-Teile (c), 0,1 bis 2 Gew.-Teile (d) und 0,1 bis 1 Gew.Teile (e).

17. Polymerzusammensetzung gemäss Anspruch 1, enthaltend ausser den Komponenten (a) bis (e) einen oder mehrere Zusatzstoffe aus der Reihe der Weichmacher, Phosphite, Blei- und Cadmiumverbindungen, metallfreien PVC-Stabilisatoren, Schlagzähigkeitsmodifikatoren, Wärmestandfestigkeitsverbesserer, Epoxidverbindungen, Antioxidantien, UV-Absorber und Lichtschutzmittel, Pigmente, Farbstoffe, Füllstoffe, Gleitmittel und Flammschutzmittel.

18. Verfahren zum Stabilisieren von chlorhaltigen Polymeren gegen Schädigung durch Wärme und Licht durch Zusatz von
a) mindestens einem sterisch gehinderten Amin,
b) mindestens einer organischen oder anorganischen Zinkverbindung,
c) mindestens einer organischen oder anorganischen Calcium-, Magnesium- oder/und Bariumverbindung
d) mindestens einer 1,3 Dicarbonylverbindung,
und gegebenenfalls weiteren Zusatzstoffen unter Ausschluss von Organozinnverbindungen, von Hydrotalcit-Verbindungen und von Treib- oder Schäumungsmitteln.

## Claims

1. A stabilised chlorine-containing polymer composition comprising
a) at least one chlorine-containing polymer,
b) at least one sterically hindered amine,
c) at least one organic or inorganic zinc compound,
d) at least one organic or inorganic calcium, magnesium and/or barium compound, and
e) at least one 1,3-dicarbonyl compound,
but no organotin compounds, no hydrotalcite compounds and no blowing agents or foaming agents.

2. A polymer composition according to claim 1, wherein component a) is a polyvinyl chloride or a copolymer containing at least 80 % of vinyl chloride, or a mixture (polyblend) of a polymer of this type with another chlorine-containing or chlorine-free polymer.

3. A polymer composition according to claim 1, wherein component b) is a polyalkylpiperidine derivative containing at least one group of the formula I 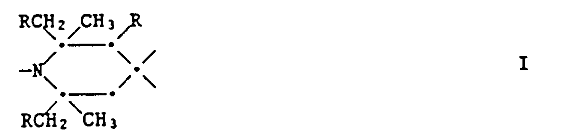 in which R is hydrogen or methyl.

4. A polymer composition according to claim 3, in which R in the formula I is hydrogen.

5. A polymer composition according to claim 3, wherein component b) is a polyalkylpiperidine derivative of the formula II 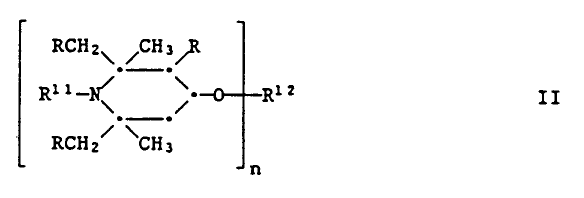 in which R is hydrogen, R¹¹ is hydrogen or methyl, n is 2 and R¹² is the diacyl radical of a dicarboxylic acid having 4 to 22 carbon atoms.

6. A polymer composition according to claim 3, wherein component b) is a polyalkylpiperidine derivative of the formula VA 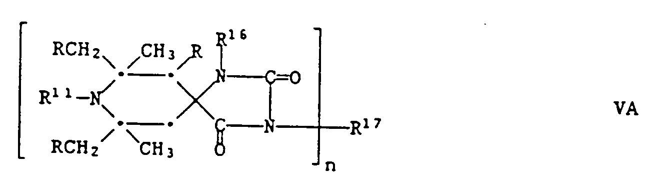 in which n is 1, R is hydrogen, R¹¹ is hydrogen or methyl, R¹⁶ is hydrogen or C₁-C₁₂alkyl and R¹⁷ is C₁-C₁₂alkyl, allyl or benzyl.

7. A polymer composition according to claim 3, wherein component b) is a polyalkylpiperidine compound of the formula VI 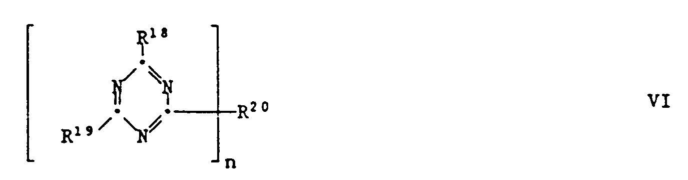 in which n is 4, R¹⁸ and R¹⁹ are a 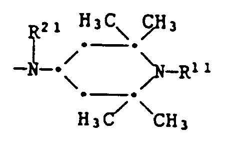 group in which R¹¹ is hydrogen or methyl and R²¹ is hydrogen or C₁-C₆alkyl, and R²⁰ is the tetravalent radical of an aliphatic tetramine.

8. A polymer composition according to claim 3, wherein component b) is an oligomeric or polymeric polyalkylpiperidine compound from the series comprising the polyesters and polyaminotriazines.

9. A polymer composition according to claim 1, wherein component c) is the zinc salt of a C₁-C₂₂carboxylic acid, of a C₆-C₁₈phenol or of a C₅-C₁₂-1,3-diketone.

10. A polymer composition according to claim 9, wherein c) is the zinc salt of an aliphatic C₇-C₂₀carboxylic acid.

11. A polymer composition according to claim 1, wherein component d) is the calcium, magnesium or barium salt of a C₁-C₂₂carboxylic acid, of a C₅-C₁₂-1,3-diketone or of a C₆-C₁₈phenol.

12. A polymer composition according to claim 11, wherein d) is the calcium, magnesium or barium salt of an aliphatic C₇-C₂₀carboxylic acid.

13. A polymer composition according to claim 1, wherein component e) is a 1,3-dicarbonyl compound of the formula VII 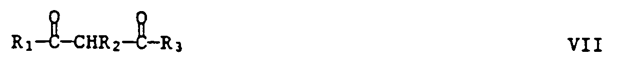 in which R₁ is C₁-C₂₂alkyl, C₅-C₁₀hydroxyalkyl, C₂-C₁₈alkenyl, phenyl, phenyl which is substituted by OH, C₂-C₄-alkyl, C₁-C₄alkoxy or halogen, C₇-C₁₀phenylalkyl, C₅-C₁₂cycloalkyl, C₅-C₁₂cycloalkyl which is substituted by C₁-C₄alkyl, or an -R₅-S-R₆ or -R₅-O-R₆ group, R₂ is hydrogen, C₁-C₈alkyl, C₂-C₁₂alkenyl, phenyl, C₇-C₁₂alkylphenyl, C₇-C₁₀phenylalkyl or a -CO-R₄ group, R₃ is as defined for R₁ or is C₁-C₁₈alkoxy, R₄ is C₁-C₄alkyl or phenyl, R₅ is C₁-C₁₀alkylene, and R₆ is C₁-C₁₂alkyl, phenyl, C₇-C₁₈alkylphenyl or C₇-C₁₀phenylalkyl.

14. A polymer composition according to claim 13, wherein component e) is a compound of the formula VII in which R₁ is C₁-C₁₈alkyl, phenyl, phenyl which is substituted by OH, methyl or methoxy, C₇-C₁₀phenylalkyl or cycloalkyl, R₂ is hydrogen, and R₃ is as defined for R₁.

15. A polymer composition as claimed in claim 1, comprising 100 parts by weight of (a), from 0.01 to 2 parts by weight of (b), from 0.01 to 3 parts by weight of (c), from 0.01 to 3 parts by weight of (d) and from 0.05 to 2 parts by weight of (e).

16. A polymer composition according to claim 15, comprising 100 parts by weight of (a), from 0.1 to 1 part by weight of (b), from 0.1 to 2 parts by weight of (c), from 0.1 to 2 parts by weight of (d) and from 0.1 to 1 part by weight of (e).

17. A polymer composition according to claim 1, containing, in addition to components (a) to (e), one or more additives from the series comprising plasticisers, phosphites, lead compounds, cadmium compounds, metal-free PVC stabilisers, impact modifiers, heat resistance improvers, epoxide compounds, antioxidants, UV absorbers, light stabilisers, pigments, dyes, fillers, lubricants and flameproofing agents.

18. A process for stabilising chlorine-containing polymers against damage by heat and light, by adding
a) at least one sterically hindered amine,
b) at least one organic or inorganic zinc compound,
c) at least one organic or inorganic calcium, magnesium and/or barium compound,
d) at least one 1,3-dicarbonyl compound,
and, if desired, further additives, but no organotin compounds, hydrotalcite compounds, blowing agents or foaming agents.

## Revendications

1. Composition polymère chlorée stabilisée contenant :
a) au moins un polymère chloré,
b) au moins une amine à encombrement stérique,
c) au moins un composé de zinc organique ou inorganique,
d) au moins un composé organique ou inorganique de calcium, de magnésium ou/et de baryum, et
e) au moins un composé 1,3-dicarbonyle,
en absence d'un composé d'organoétain, en absence d'un composé de la série des hydrotalcites et en absence d'un porogène ou d'un agent moussant.

2. Composition polymère selon la revendication 1, caractérisée en ce que le constituant a) est un chlorure de polyvinyle ou un copolymère contenant au moins 80% de chlorure de polyvinyle ou un mélange (polyblend) d'un tel polymère avec un autre polymère chloré ou sans chlore.

3. Composition polymère selon la revendication 1, caractérisée en ce que le constituant b) est un dérivé de polyalkylpipéridine qui contient au moins un groupe de formule I 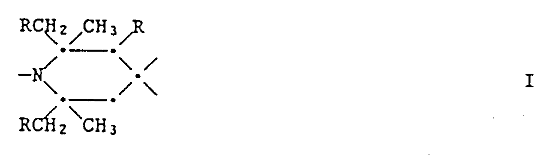 dans laquelle R est l'hydrogène ou le méthyle.

4. Composition polymère selon la revendication 3, où R dans la formule I est l'hydrogène.

5. Composition polymère selon la revendication 3, caractérisée en ce que le constituant b) est un dérivé de polyalkylpipéridine de formule II 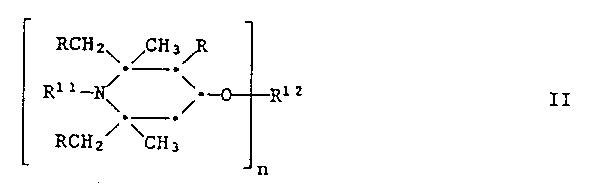 dans laquelle R est l'hydrogène, R¹¹ est l'hydrogène ou le méthyle et n vaut 2 et R¹² est le radical diacyle d'un acide dicarboxylique avec 4 à 22 atomes de C.

6. Composition polymère selon la revendication 3, caractérisée en ce que le constituant b) est un composé de polyalkylpipéridine de formule VA 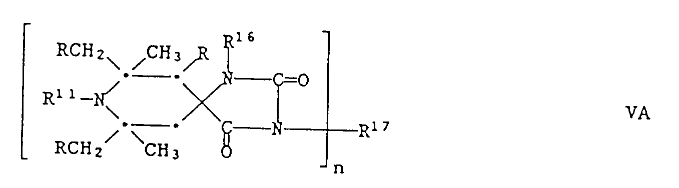 dans laquelle n vaut 1 ou 2, R est l'hydrogène, R¹¹ est l'hydrogène ou le méthyle, R¹⁶ est l'hydrogène ou un alkyle en C₁-C₁₂ et R¹⁷ est un alkyle en C₁-C₁₂, un allyle ou un benzyle.

7. Composition polymère selon la revendication 3, caractérisée en ce que le constituant b) est un composé de polyalkylpipéridine de formule VI 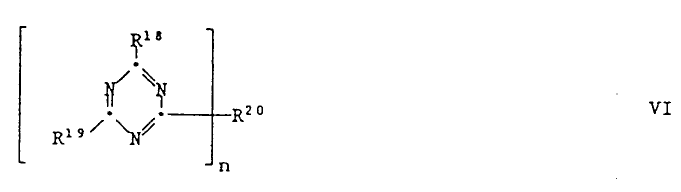 dans laquelle n vaut 4, R¹⁸ et R¹⁹ représentent un groupe 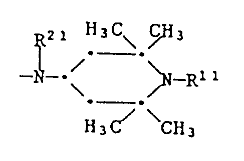 dans laquelle R¹¹ représente l'hydrogène ou le méthyle et R²¹ l'hydrogène ou un alkyle en C₁-C₆ et R²⁰ représente le radical tétravalent d'une tétraamine aliphatique.

8. Composition polymère selon la revendication 3, caractérisée en ce que le constituant b) est un composé de polyalkylpipéridine oligomère ou polymère de la série des polyesters ou des polyaminotriazines.

9. Composition polymère selon la revendication 1, caractérisée en ce que le constituant c) est le sel de zinc d'un acide carboxylique en C₁-C₂₂, d'un phénol en C₆-C₁₈ ou d'une 1,3-dicétone en C₅-C₁₂.

10. Composition polymère selon la revendication 9, caractérisée en ce que le constituant c) est le sel de zinc d'un acide carboxylique en C₇-C₂₀ aliphatique.

11. Composition polymère selon la revendication 1, caractérisée en ce que le constituant d) est le sel de calcium, de magnésium ou de baryum d'un acide carboxylique en C₁-C₂₂, d'une 1,3-dicétone en C₅-C₁₂ ou d'un phénol en C₆-C₁₈.

12. Composition polymère selon la revendication 11, caractérisée en ce que d) est le sel de calcium, de magnésium ou de baryum d'un acide carboxylique aliphatique en C₇-C₂₀.

13. Composition polymère selon la revendication 1, caractérisée en ce le constituant e) est un composé 1,3-dicarbonyle de formule VII 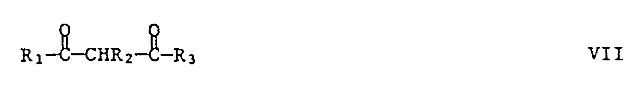 dans laquelle R₁ représente un alkyle en C₁-C₂₂, un hydroxyalkyle en C₅-C₁₀, un alcényle en C₂-C₁₈, un phényle, un phényle substitué par OH, alkyle en C₁-C₄, alcoxy en C₁-C₄ ou halogène, un phénylalkyle en C₇-C₁₀, un cycloalkyle en C₅-C₁₂, un cycloalkyle en C₅-C₁₂ substitué par alkyle en C₁-C₄, ou un groupe -R₅-S-R₆ ou -R₅-O-R₆-, R₂ représente l'hydrogène, un alkyle en C₁-C₈, un alcényle en C₂-C₁₂, phényle, un alkylphényle en C₇-C₁₂, un phénylalkyle en C₇-C₁₀ ou un groupe -CO-R₄,
R₃ a les significations données pour R₁ ou représente un alcoxy en C₁-C₁₈,
R₄ représente un alkyle en C₁-C₄ ou un phényle,
R₅ représente un alkylène en C₁-C₁₀, et
R₆ représente un alkyle en C₁-C₁₂, un phényle, un alkylphényle en C₇-C₁₈ ou un phénylalkyle en C₇-C₁₀.

14. Composition polymère selon la revendication 13, caractérisée en ce le constituant e) est un composé de formule VII, où R₁ est un alkyle en C₁-C₁₈, un phényle ou un phényle substitué par OH, méthyle ou méthoxy, un phénylalkyle en C₇-C₁₀ ou un cycloalkyle, R₂ est l'hydrogène et R₃ a l'une signification donnée pour R1.

15. Composition polymère selon la revendication 1, contenant pour 100 parties en poids (a) de 0,01 à 2 parties en poids de (b), de 0,01 à 3 parties en poids de (c), de 0,01 à 3 parties en poids de (d) et de 0,05 à 2 parties en poids de (e).

16. Composition polymère selon la revendication 15, contenant pour 100 parties en poids de (a) de 0,1 à 1 partie en poids de (b), de 0,1 à 2 parties en poids de (c), de 0,1 à 2 parties en poids de (d) et de 0,1 à 1 partie en poids de (e).

17. Composition polymère selon la revendication 1, contenant outre les constituants (a) à (e) un ou plusieurs adjuvants de la série des plastifiants, des phosphites, des composés de plomb et de cadmium, des stabilisants de PVC sans métaux, des agents modifiant la résilience, des agents améliorant la résistance à la chaleur, des composés époxydes, des anti-oxydants, des absorbeurs d'UV et des agents protecteurs contre la lumière, des pigments, des colorants, des charges, des agents démoulant et des agents ignifugeants.

18. Procédé pour la stabilisation de polymères chlorés contre la dégradation induite par la chaleur et par la lumière par addition de :
a) au moins une amine à encombrement stérique,
b) au moins un composé de zinc organique ou minéral,
c) au moins un composé organique ou minéral de calcium, de magnésium ou/et de baryum,
d) au moins un composé 1,3-dicarbonyle,
et éventuellement d'autres adjuvants avec l'exclusion des composés d'organo-étain, des composés d'hydrotalcite et de porogènes ou d'agents moussants.
